# EUROPEAN PATENT SPECIFICATION

(11) **EP 4 241 536 B1**
(45) Date of publication and mention of the grant of the patent: **01.10.2025**
(21) Application number: 20960364.6
(22) Date of filing: 06.11.2020
(51) Int. Cl.: H04W 24/10, H04W 88/04

(54) **RELAY SELECTION BASED ON EARLY MEASUREMENT IN L2 RELAY**
RELAISAUSWAHL AUF BASIS VON FRÜHER MESSUNG IN L2-RELAIS
SÉLECTION DE RELAIS BASÉE SUR UNE MESURE PRÉCOCE DANS UN RELAIS L2

(43) Date of publication of application: 13.09.2023
(73) Proprietor: QUALCOMM INCORPORATED, San Diego, California 92121-1714 (US)
(72) Inventor: CHENG, Peng, San Diego, California 92121-1714 (US); XU, Huilin, San Diego, California 92121-1714 (US)
(74) Representative: Tomkins & Co
(86) International application number: PCT/CN2020/126981
(87) International publication number: WO 2022/094903

(56) References cited:
- EP-A1- 3 282 767
- WO-A1-2016/161603
- WO-A1-2016/163823
- WO-A1-2016/179832
- WO-A1-2016/179835
- WO-A1-2016/183710
- WO-A1-2016/183710
- WO-A1-2017/201741
- US-A1- 2019 313 315
- HUAWEI, HISILICON: "Common aspects for L2 and L3 UE-to-Network relay", 3GPP DRAFT; R2-2008049, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20200817 - 20200828, 7 August 2020 (2020-08-07), Mobile Competence Centre ; 650, route des Lucioles ; F-06921 Sophia-Antipolis Cedex ; France , XP051912668

## Description

### FIELD OF TECHNOLOGY

The following relates to wireless communications, including relay selection based on early measurement in L2 relay.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Some wireless communications networks may support relayed or sidelink communications to extend coverage and increase reliability between devices in the network. Conventional techniques for establishing and maintaining the sidelink, however, may be deficient.

WO 2016/183710 discloses a method and apparatus for relay selection in device-to-device communications. The method comprises: a relay selection device determines link quality of a first link of each candidate relay UE in a candidate relay UE list, the candidate relay UE list comprising at least one candidate relay UE, and the first link of each candidate relay UE being a radio link between each candidate relay UE and a base station; and determine a target relay UE in the candidate relay UE list according to the link quality of the first link of each candidate relay UE in the candidate relay UE list, the target relay UE being used for relaying data transmitted between a first UE and the base station. By means of the method and apparatus for relay selection in device-to-device communications disclosed in the present invention, a proper relay UE can be selected for a first UE.

US2019/0313315 discloses methods and electronic devices that enhance wireless communication by enabling user equipment (UE) to dynamically select or adjust between cellular and relay links based on link quality or connection status. The proposed solutions improve service continuity, reduce power consumption, and optimize link measurement processes, especially in relay-assisted communication scenarios.

### SUMMARY

The described techniques relate to improved methods, and apparatuses that support relay selection based on early measurement in L2 relay.

A method for wireless communications at a UE is described. The method includes receiving a measurement configuration for performing a plurality of measurements on a set of relay UE candidates, performing the plurality of measurements on the set of relay UE candidates in accordance with the measurement configuration, transmitting, to a base station and based at least in part on an idle connection status or an inactive connection status of the UE, a measurement report comprising an indication of the plurality of measurements associated with the set of relay UE candidates, receiving, from the base station, a relay configuration comprising a relay pairing between the UE and a first relay UE candidate of the set of relay UE candidates based at least in part on the measurement report, and establishing a sidelink communication link with the first relay UE candidate in accordance with the relay configuration.

An apparatus for wireless communications at a UE is described. The apparatus inclludes a processor, memory in electronic communication with the processor, and instructions stored in the memory. The instructions are executable by the processor to cause the apparatus to receive a measurement configuration for performing a plurality of measurements on a set of relay UE candidates, perform the plurality of measurements on the set of relay UE candidates in accordance with the measurement configuration, transmit, to a base station and based at least in part on an idle connection status or an inactive connection status of the UE, a measurement report comprising an indication of the plurality of measurements associated with the set of relay UE candidates, receive, from the base station, a relay configuration comprising a relay pairing between the UE and a first relay UE candidate of the set of relay UE candidates based at least in part on the measurement report, and establish a sidelink communication link with the first relay UE candidate in accordance with the relay configuration.

A method for wireless communications at a base station is described. The method includes transmitting, to a UE, a measurement configuration for the UE to perform a plurality of measurements on a set of relay UE candidates, receiving, based at least in part on an idle connection status or an inactive connection status of the UE, a measurement report comprising an indication of the plurality of measurements associated with the set of relay UE candidates, determining a relay pairing between the UE and a first relay UE candidate of the set of relay UE candidates based at least in part on the measurement report, the relay pairing for establishing a sidelink communication link between the UE and the first relay UE candidate, and transmitting, to the UE, a relay configuration comprising the relay pairing.

An apparatus for wireless communications at a base station is described. The apparatus includes a processor, memory in electronic communication with the processor, and instructions stored in the memory. The instructions are executable by the processor to cause the apparatus to transmit, to a UE, a measurement configuration for the UE to perform a plurality of measurements on a set of relay UE candidates, receive, based at least in part on an idle connection status or an inactive connection status of the UE, a measurement report comprising an indication of the plurality of measurements associated with the set of relay UE candidates, determine a relay pairing between the UE and a first relay UE candidate of the set of relay UE candidates based at least in part on the measurement report, the relay pairing for establishing a sidelink communication link between the UE and the first relay UE candidate, and transmit, to the UE, a relay configuration comprising the relay pairing.

### BRIEF DESCRIPTION OF THE DRAWINGS

FIG. 1 illustrates an example of a wireless communications system that supports relay selection based on early measurement in L2 relay in accordance with aspects of the present disclosure.
FIG. 2 illustrates an example of a wireless communications system that supports relay selection based on early measurement in L2 relay in accordance with aspects of the present disclosure.
FIG. 3 illustrates an example of a process flow that supports relay selection based on early measurement in L2 relay in accordance with aspects of the present disclosure.
FIG. 4 illustrates an example of a process flow that supports relay selection based on early measurement in L2 relay in accordance with aspects of the present disclosure.
FIGs. 5 and 6 show block diagrams of devices that support relay selection based on early measurement in L2 relay in accordance with aspects of the present disclosure.
FIG. 7 shows a block diagram of a communications manager that supports relay selection based on early measurement in L2 relay in accordance with aspects of the present disclosure.
FIG. 8 shows a diagram of a system including a device that supports relay selection based on early measurement in L2 relay in accordance with aspects of the present disclosure.
FIGs. 9 and 10 show block diagrams of devices that support relay selection based on early measurement in L2 relay in accordance with aspects of the present disclosure.
FIG. 11 shows a block diagram of a communications manager that supports relay selection based on early measurement in L2 relay in accordance with aspects of the present disclosure.
FIG. 12 shows a diagram of a system including a device that supports relay selection based on early measurement in L2 relay in accordance with aspects of the present disclosure.
FIGs. 13 through 18 show flowcharts illustrating methods that support relay selection based on early measurement in L2 relay in accordance with aspects of the present disclosure.

### DETAILED DESCRIPTION

In some wireless communications networks, user equipment (UEs) may utilize Device-to-Device (D2D) communications, where a first UE may transmit data via a direct link or sidelink to a second UE in the network. In some cases, sidelink communications may enable one or more remote UEs (for example, UEs that are out-of-coverage of the wireless network) to communicate with the network via a relay UE (for example, a UE that is in-coverage of the wireless network). In some cases, relayed communications may efficiently redirect traffic to and from remote UEs in proximity of the network and thus may extend coverage of the wireless network.

To establish and maintain a relay connection with the network, a remote UE may perform various relay selection and reselection procedures. During a relay selection procedure, a remote UE may discover neighboring relay UEs using a direct discovery procedure. In some examples, the sidelink establishment may be initiated by the relay UE candidates, which may periodically broadcast messages to indicate their presence, and the remote UE may listen for the messages transmitted by the relay UE candidates. In some other examples, the sidelink establishment may be initiated by the remote UE, which may transmit solicitation messages to the number of relay UE candidates. The relay UE candidates may respond to the remote UE via a response message to establish a connection with the remote UE. The remote UE may identify a sidelink discovery reference signal received power (SD-RSRP) for each relay UE candidate, and may select a relay having a highest SD-RSRP with which to establish a sidelink.

In some examples, relay selection may be performed in accordance with layer 2 (L2) or layer 3 (L3) routing. During an L3 relay procedure, the relay UE may act as a router for unicast internet protocol (IP) information. In some examples, relay communications between remote UE and a relay UE may be transparent to the network. For example, the network may not be aware of sidelink communications between the remote UE and the relay UE. During an L2 relay procedure, the relay UE may relay data below the packet data convergence protocol (PDCP) layer. During L2 relaying, the network may be aware of the relay configuration between the remote UE and a number of relay UE candidates, and may select a sidelink relay pairing based on link strength or quality of the relay link between the remote UE and a relay UE candidate, traffic or channel conditions, or the like. Such relay selection by the network may increase the quality and reliability of relayed communications and may further extend coverage of the wireless communications system.

L2 relay techniques may support early measurements for relay selection. For example, upon transitioning to an idle or inactive state, the remote UE may receive a radio resource control (RRC) release message indicating a list of relay UE candidates on which the remote UE may perform early measurements. For example, the RRC release message may indicate a list of relay UE candidates on which the UE may perform early measurements. The remote UE may transmit a measurement report to a base station indicating the measurements of the relay UE candidates. Based on the early measurements of the relay UE candidates performed by the remote UE and the measurement report, the base station may select a relay UE candidate-remote UE relay pairing, and may transmit an indication of the pairing to the remote UE along with other relay configuration information. Using the identified relay pairing, the remote UE may establish a sidelink connection with the relay UE candidate.

Particular aspects of the subject matter described herein may be implemented to realize one or more advantages. The described techniques may support improvements in techniques for UE relay selection by supporting early measurements by the remote UE and relay selection by the network in L2. In some examples, the techniques may allow for increased time that the remote UE spends in the idle or inactive state, which may improve battery performance. For example, the UE may not transition to an RRC connected state to perform relay UE candidate measurement but may rather perform early measurements while in an idle or inactive mode. In addition, the techniques may increase the reliability of sidelink communications and the quality of the remote UE to relay UE pairing. For example, the network may select a relay pairing with the highest link quality or traffic conditions or other channel characteristics known by the network. As such, supported techniques may include improved network operations and, in some examples, may promote increased communications efficiency, among other benefits.

Aspects of the disclosure are initially described in the context of wireless communications systems. For example, aspects of the disclosure may be described in the context of relayed or sidelink communications between UEs and the network. Aspects of the disclosure are further illustrated by and described with reference to apparatus diagrams, system diagrams, process flows, and flowcharts that relate to relay selection based on early measurement in L2 relay.

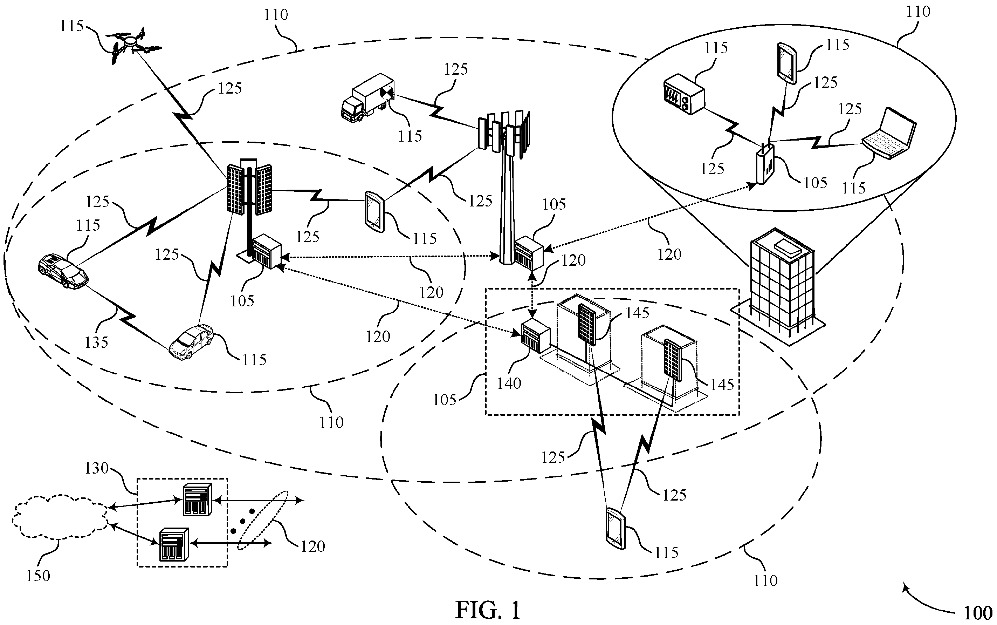

**FIG.** 1 illustrates an example of a wireless communications system 100 that supports relay selection based on early measurement in L2 relay in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a nextgeneration NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally, or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transactionbased business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally, or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

Wireless communications system 100 may support sidelink communications, where a first UE 115 may transmit data via a direct link or sidelink to a second UE 115. In some cases, sidelink communications may enable one or more remote UEs 115 (for example, UEs 115 that are out-of-coverage of the wireless network) to communicate with the network via a relay UE 115 (for example, a UE 115 that is in-coverage of the wireless network). In some cases, relayed communications may allow for redirection of traffic to and from remote UEs in proximity of the network and thus may extend coverage and reliability of communications for the wireless network.

To establish and maintain a relay connection with the network, a remote UE 115 may perform various relay selection and reselection procedures. During a relay selection procedure, a remote UE may discover neighboring relay UEs using a direct discovery procedure, which may be initiated by the remote UE 115, or by one or more relay UE candidates. In some examples, relay selection may be performed in accordance with L2 or L3 routing. During an L3 relay procedure, the relay UE may act as a router for unicast IP information, and relay communications between remote UE and a relay UE may be transparent to the network. During an L2 relay procedure, the relay UE 115 may relay data below the PDCP layer, and the network may be aware of the relay configuration between the remote UE and a number of relay UE candidates, and may select a sidelink relay pairing based on link strength or quality of the relay link between the remote UE and a relay UE candidate or other information known by a base station 105 such as traffic or routing information.

L2 relay techniques may support early measurements for relay selection. For example, upon transitioning to an idle or inactive state, the remote UE 115 may receive an RRC release message indicating a list of relay UE candidates on which to perform early measurements. The remote UE 115 may transmit a measurement report to a base station indicating the measurements of the relay UE candidates. Based on the early measurements of the relay UE candidates performed by the remote UE 115 and the measurement report, the base station may select a relay UE candidate-remote UE relay pairing, and may transmit an indication of the pairing to the remote UE along with other relay configuration information. Using the identified relay pairing, the remote UE 115 may establish a sidelink connection with the relay UE candidate 115.

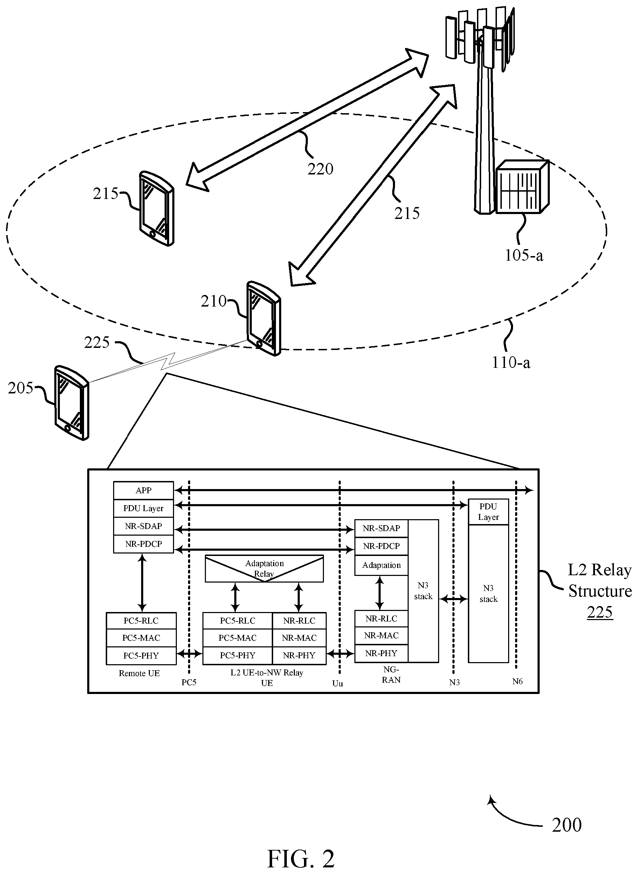

**FIG. 2** illustrates an example of a wireless communications system 200 that supports relay selection based on early measurement in L2 relay in accordance with aspects of the present disclosure. In some examples, wireless communications system 200 may implement aspects of wireless communication system 100. For example, the wireless communications system 200 may include a base station 105-a and UEs 205, 210, and 215, which may be examples of base stations 105 and UEs 115 as described with reference to FIG. 1. Base station 105-a may serve a number of cells or geographic coverage areas (for example, geographic coverage area 110-a).

In some wireless communications networks, UEs may utilize D2D communications, where a first UE 205 may transmit data via a direct link or sidelink to a second UE 210 in the network coverage area 110-a. In some cases, sidelink communications may enable remote UEs (e.g., such as a UE 205 that is out of coverage of the wireless network) to communicate with the network via a relay UE (e.g., such as UE 210 or 215 that is in-coverage of the wireless network). In some cases, relayed communications may efficiently redirect traffic to and from remote UEs in proximity of the network and may extend coverage of the wireless network.

To establish and maintain a relay connection with the network, remote UE 205 may perform a relay selection and reselection procedures. During a relay selection procedure, remote UE 205 may discover neighboring relay UEs (e.g., relay UEs 210 and 215) using a direct discovery procedure. For example, the remote UE 205 may determine a sidelink discovery reference signal received power (SD-RSRP) for each relay UE in the network, and may select a number of relay UE candidates based on the SD-RSRP for each relay UE candidate (e.g., the remote UE 205 may select relay UE candidates 210 and 215, whose SD-RSRP exceeds a threshold set by *q-RxLevMin* by *minHyst*)*.* The remote UE 205 may determine a relay UE candidate having a highest SD-RSRP (e.g., relay UE candidate 210), and may perform a sidelink connection procedure to establish a direct relay link with the selected relay UE candidate 210.

In some examples, the relay UE candidates may periodically broadcast messages to indicate their presence in addition to connection establishment capabilities, and the remote UE 205 may listen for the messages transmitted by the relay UE candidates. In some other examples, the relay connection establishment may be initiated by the remote UE 205, which may transmit solicitation messages to the number of relay UE candidates. The relay UE candidates may respond to the remote UE 205 via a response message to establish a connection with the remote UE 205.

During a relay reselection procedure, remote UE 205 may be connected with relay UE 210, and may determine that a signal strength (e.g., SD-RSRP) associated with the relay link is below a threshold set by *q-RxLevMin* by *minHyst.* The remote UE 205 may perform a direct discovery procedure to discover additional relay UE candidates. The remote UE 205 may determine a relay UE candidate having a highest SD-RSRP (which may be different from relay UE 210) and may perform a sidelink reselection procedure to establish a direct relay link with the different selected relay UE candidate.

In some examples, relay selection may be performed in accordance with layer 2 (L2) or layer 3 (L3) routing. During an L3 relay procedure, the relay UE 210 may perform a UE-to-Network Relay function and may act as a router for unicast internet protocol (IP) information. In some examples, a relay UE may forward information from the remote UE 205 to the network (e.g., as an uplink transmission 215 to the base station 105-a), and may forward downlink information from the network to the remote UE (e.g., as a sidelink transmission 225). The relay UE 210 may support an L3 forwarding function that may relay Internet Protocol (IP) traffic to the network (e.g., core network (CN)) using a PDU session that is specific to the relay UE). L3 routing may support local routing (e.g., routing between Remote UE-Relay, and Remote UE-Remote UE). In addition, non-IP traffic may be supported in L3 by encapsulation in IP traffic, or may be provided a dedicated PDU session per remote UE. In some examples, relay communications between remote UE 205 and a relay UE 210 may be transparent to the network. For example, the base station 105-a may not be aware of sidelink communications 225 between the remote UE 205 and the relay UE 210.

During an L2 relay procedure 225, the relay UE 210 may relay data below the PDCP layer. The protocol stack associated with the L2 relay includes an PDU connected to a PDCP layer which is connected to a sidelink RLC layer. PDUs provided by the RLC layer are directed to a device to network (D2N) MAC entity or a device to device (D2D) MAC entity. The D2D MAC provides a connection to the base station 105-a via Uu interface, and the D2D MAC connects to relay UE 210 via a sidelink (e.g., PC5) interface 225. In some examples, the relay UE 210 may forward the PC5 bearer and the Uu bearer using an adaptation layer function. In L2 relay configuration 225, traffic may terminate at the core network which may prevent direct communication between remote UEs (e.g., data radio bears of the remote UEs may be controlled by the network). In addition, in L2 configuration 225, the network may be aware of the relay configuration between the remote UE 205 and a number of relay UE candidates 210 and 215, and may select a sidelink relay pairing (e.g., a pairing between remote UE 205 and relay UE 210) based on link strength or quality of the relay link. Such relay selection by the network may increase the quality and reliability of relayed communications and may further extend coverage of the wireless communications system.

Some relay configurations (for example, L2 relay configuration 225) may support early measurement techniques for relay selection. For example, upon transitioning to an idle or inactive state, remote UE 205 may receive an RRC release message indicating a list of relay UE candidates on which to perform early measurements. For example, the RRC release message may indicate relay UE candidates 210 and 215 as a list of relay UE candidates for the UE 205 to perform early measurements. The remote UE 205 may transmit a measurement report to the base station 105-a indicating the measurements of the relay UE candidates. Based on the early measurements of the relay UE candidates performed by the remote UE 205 and the measurement report, the base station may select a relay UE candidate-remote UE relay pairing or a direct connection with the base station (e.g., based on signal strength or other reported measurements).

The remote UE 205 may receive a measurement configuration in an RRC release message from the base station 105-a upon transitioning to an inactive or idle state. The RRC release message may further include a measurement configuration for both the Uu link (e.g., a communication link between the remote UE 205 and the base station 105-a) and a measurement configuration for the PC5 link 225 (e.g., the sidelink between the remote UE 205 and one or more relay UE candidates 210 and 215). In some examples, the measurement configuration included in the RRC release message may specify a list of frequencies associated with the relay UE candidates (e.g., as given by a list of absolute radio-frequency channel numbers (ARFCN) of candidate relays). Each frequency (e.g., associated with one or more relay UE candidates), may include a list of relay identifiers, for example, a UE ID for each relay UE, and a cell identifier (e.g., CGI or PCI) of the cell associated with the relay UE.

Additionally, or alternatively, the measurement configuration may specify one or more measurement quantities that the remote UE 205 may use to perform measurements on the set of relay UE candidates 210 and 215. For example, the measurement quantities may include RSRP/RSRQ/SINR quantities associated with the PC5 relay link or the communication beam associated with the relay UE candidates. In addition, the measurement configuration may identify a number of beam reporting events and a PC5 beam RSRP reporting threshold for the relay UE candidates.

Further, the measurement report may include an L3 filter configuration for a sidelink measurement associated with the relay UE candidate. For example, the network may configure a number of different filters used for different amounts of time or in accordance with different network conditions. The measurement configuration may also include a DMRS configuration (e.g., a time or frequency location) for a discovery message associated with the relay UE candidates 210 and 215.

Upon receiving the RRC release message including the measurement configuration, the remote UE 205 may begin performing early measurements of the specified relay UE candidates 210 and 215. In some examples, the RRC release message may include a timer (e.g., a T331) and the remote UE 205 may initiate the timer upon receiving the RRC release message. The remote UE 205 may perform measurements on the relay UE candidates 210 and 215 for the duration of time configured by the timer and may stop measurements upon expiration of the timer. In some cases, the remote UE 205 may pause early measurements and the timer during a cell reselection procedure and may resume early measurements and the timer upon cell reselection.

In some examples, measurement reporting and relay selection may vary based on a connection status of the remote UE 205. For example, in cases where the remote UE 205 is in an RRC inactive state, the network may transmit a request for the sidelink measurement report in a RRC resume message (e.g., Msg4, *RRCResume),* and the remote UE 205 may provide the sidelink measurement report in a RRC resume complete message (e.g., Msg 5, *RRCResumeComplete*)*.* In some other cases where the remote UE is in an RRC idle state, the remote UE 205 may transmit an indication of availability of the sidelink measurement report to the base station 105-a in an RRC setup completion message (e.g., Msg 5, *RRCSetupComplete*/*RRCResumeComplete*). The base station 105-a may transmit a request for the sidelink measurement report in a *UEInformationRequest* message, and the remote UE 205 may transmit the sidelink measurement report in a *UEInformationResponse* message.

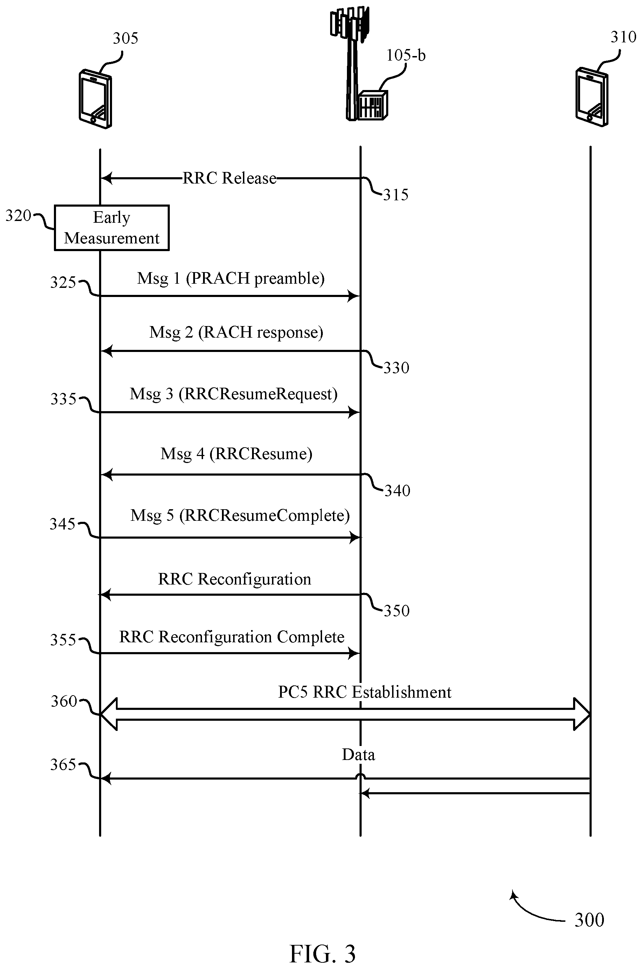

**FIG. 3** illustrates an example of a process flow 300 that supports relay selection based on early measurement in L2 relay in accordance with aspects of the present disclosure. In some examples, process flow 300 may implement aspects of wireless communication system 100. The process flow 300 includes UEs 305 and 310, and base station 105-b (e.g., which may be examples of the corresponding devices described with reference to FIGs. 1-2). Alternative examples of the following may be implemented, where some steps are performed in a different order than described or are not performed at all. In some cases, steps may include additional features not mentioned below, or further steps may be added. In addition, while process flow 300 shows processes between base station 105-b and a two UEs 305 and 310, it should be understood that these processes may occur between any number of network devices.

At 315, the base station 105-b may transmit, and the UE 305 may receive, a RRC release message which prompts the UE 305 to transition from a connected state (e.g., a RRC connected state) to an inactive state (e.g., an RRC inactive state). The RRC release message may include a measurement configuration (e.g., *EarlyMeasConfig*) for performing a number of early measurements on a set of relay UE candidates, and for establishing a L2 relay connection between the UE 305 and a relay UE candidate. For example, in some cases the measurement configuration may indicate a number of measurements to perform on relay UE candidate 310, among other relay UE candidates for establishing the sidelink. In some examples, the measurement configuration may include an identifier of UE relay candidate 310, a different identifier of a cell associated with the UE relay candidate 310, one or more measurement quantities for performing measurements on the UE relay candidate 310, etc. In some examples, the measurement configuration may indicate performing RSRP measurements, RSRQ measurements, and SINR measurements, or any other signal measurements associated with a candidate sidelink connection between the UE 305 and the relay UE candidate 310.

In some examples, the measurement configuration may further include a frequency list of a number of potential relay UE candidates that the UE 305 may perform measurements on. For example, the frequency list may include the absolute radio-frequency channel number (ARFCN) of each relay UE candidate, and the UE 305 may identify each relay UE candidate based on the candidate's ARFCN in the list. For each frequency associated with each relay UE candidate, the measurement configuration may specify a UE specific ID of the relay UE candidate, a cell identifier (e.g., a cell global identity (CGI) or a physical cell ID (PCI)) of the cell associated with the relay UE candidate, a measurement quantity of the relay UE candidate and a measurement quantity of the communication beam associated with the relay UE candidate (e.g., RSRP, RSRQ, SINR). The measurement configuration may further include a L3 filter configuration associated with the sidelink measurement, a DMRS configuration associated with a discovery message for the relay UE candidate, and threshold number of beam reporting events and a threshold RSRP for sidelink communications associated with the relay UE candidate.

At 320, the UE 305 may perform the early measurements on the set of relay UE candidates (including relay UE candidate 310) identified from the measurement configuration. In some cases, the UE 305 may perform the early measurements prior to determining whether to establish a sidelink with one of the relay UE candidates. In some examples, the UE 305 may identify a timer associated with performing the early measurements (for example, the timer may be configured by the base station 105-b in the measurement configuration received in the RRC release message). The UE 305 may initiate the timer in accordance with the measurement configuration and may perform early measurements for the duration of the timer. In some examples, the UE 305 may perform cell reselection while performing the early measurements. In such cases, the UE 305 may suspend the timer and may suspend performing the early measurements in response to the cell reselection and may resume the timer upon completion of the reselection.

At 325, the UE 305 may transmit a physical random access channel (PRACH) preamble to the base station 105-b to perform uplink synchronization, and at 330, the base station 105-b may transmit a random access channel (RACH) response to the UE 305 to complete the random access procedure.

At 335, the UE 305 may transmit an RRC resume request message (e.g., RRCResumeRequest) to initiate a transition of the UE 305 from the inactive state to a connected state. At 340, the base station 105-b resumes the RRC connection based on the RRC resume request from the UE 305 and may resume the suspended RRC connection with the UE 305 by transmitting an RRC resume message (e.g., RRCResume). In some examples, the base station 105-b may include a request for an early measurement report (e.g., a PC5 EMR) from the UE 305 which includes the early measurements of the relay UE candidates.

At 345, the UE 305 may transmit an RRC resume completion message (e.g., RRCResumeComplete) to the base station 105-b indicating the transition of the UE 305 from the inactive state to the connected state. In some cases, the UE 305 may include the measurement report including the early measurements in the RRC resume completion message.

At 350, the base station 105-b may compare relay pairings between the UE 305 and a number of the relay UE candidates identified in the measurement report. Based on the measurement report, the base station 105-b may identify a relay configuration including a UE relay pairing between the UE 305 and relay UE candidate 310. The base station 105-b may transmit an RRC reconfiguration message to the UE 305, where the RRC reconfiguration message indicates a paired relay ID for the UE 305 and the relay UE candidate 310. At 355, the UE 305 may transmit an RRC reconfiguration completion message to the base station 105-b.

At 360, the UE 305 may establish a sidelink communication link with the relay UE candidate 310 based on the received paired relay ID and the relay configuration. At 365, the UE 305 may transmit data to the relay UE 310 using the sidelink connection, and the relay UE 310 may relay the data transmission from the UE 305 to the base station 105-b.

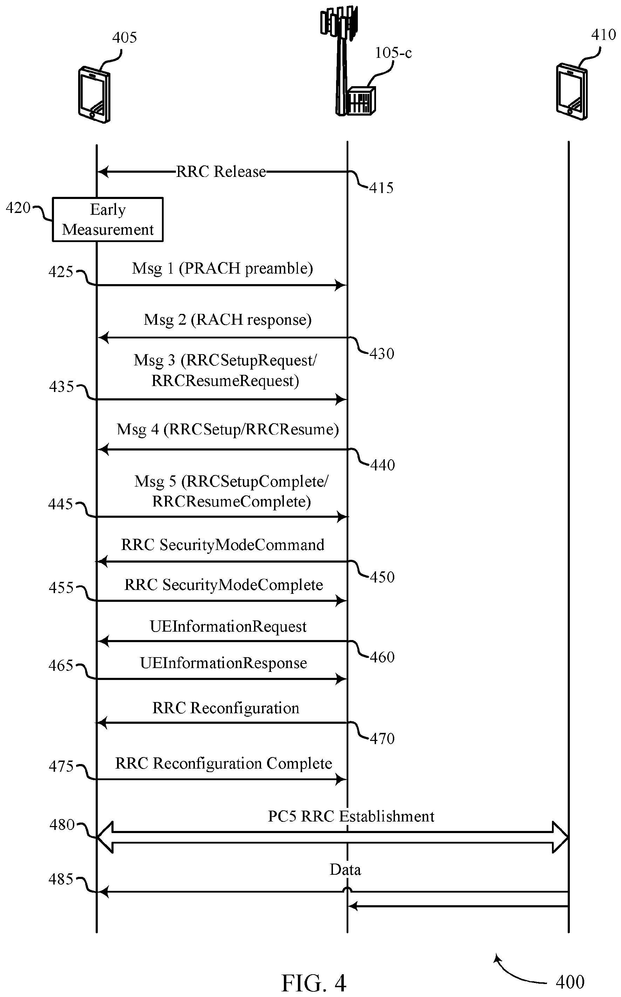

**FIG. 4** illustrates an example of a process flow 400 that supports relay selection based on early measurement in L2 relay in accordance with aspects of the present disclosure. In some examples, process flow 400 may implement aspects of wireless communication system 100. The process flow 400 includes UEs 405 and 410, and base station 105-b (e.g., which may be examples of the corresponding devices described with reference to FIGs. 1-3). Alternative examples of the following may be implemented, where some steps are performed in a different order than described or are not performed at all. In some cases, steps may include additional features not mentioned below, or further steps may be added. In addition, while process flow 400 shows processes between base station 105-b and a two UEs 405 and 410, it should be understood that these processes may occur between any number of network devices.

At 415, the base station 105-b may transmit RRC release message which prompts the UE 405 to transition from a connected state (e.g., an RRC connected state) to an idle state (e.g., an RRC idle state). The RRC release message may include a measurement configuration (e.g., *EarlyMeasConfig*) for performing a number of early measurements on a set of relay UE candidates, and for establishing a L2 relay connection between the UE 405 and a relay UE candidate. For example, in some cases the measurement configuration may indicate a number of measurements to perform on relay UE candidate 410. In some examples, the measurement configuration may include an identifier of UE relay candidate 410, a different identifier of a cell associated with the UE relay candidate 410, one or more measurement quantities (e.g., RSRP, RSRQ, SINR) for performing measurements on the UE relay candidate 410, etc.

In some examples, the measurement configuration may further include a frequency list of a number of potential relay UE candidates for which the UE 405 may perform measurements. For example, the frequency list may include the ARFCN of each relay UE candidate. For each frequency associated with each relay UE candidate, the measurement configuration may specify a UE specific ID of the relay UE candidate, a cell identifier (e.g., a CGI or a PCI) of the cell associated with the relay UE candidate, a measurement quantity of the relay UE candidate and a measurement quantity of the communication beam associated with the relay UE candidate (e.g., RSRP, RSRQ, SINR). The measurement configuration may further include a L3 filter configuration associated with the sidelink measurement, a DMRS configuration associated with a discovery message for the relay UE candidate, and threshold number of beam reporting events and a threshold RSRP for sidelink communications associated with the relay UE candidate.

At 420, the UE 405 may perform the early measurements on the set of relay UE candidates (including relay UE candidate 410) identified in the measurement configuration. In some cases, the UE 405 may perform the early measurements prior to determining whether to establish a sidelink communication link. In some examples, the UE 405 may identify a timer associated with performing the early measurements (for example, the timer may be configured by the base station 105-c in the measurement configuration received in the RRC release message). The UE 405 may initiate the timer in accordance with the measurement configuration and may perform early measurements for the duration of the timer.

At 425, the UE 405 may transmit a PRACH preamble to the base station 105-c to perform uplink synchronization, and at 430, the base station 105-c may transmit a RACH response to the UE 405 to complete the random-access procedure.

At 435, the UE 305 may transmit an RRC setup request message or an RRC resume request message (e.g., *RRCSetupRequest*/*RRCResumeRequest*) to initiate a transition of the UE 305 from the idle state to a connected state. At 440, the base station 105-c transmits an RRC setup message or a RRC resume message (e.g., *RRCSetup*/*RRCResume*) that may include a configuration for the UE to transition from the idle state to a connected state based on the RRC setup or resume request.

At 445, the UE 405 may transmit an RRC setup completion message or an RRC resume completion message (e.g., *RRCSetupComplete*/*RRCResumeComplete*) to the base station 105-c indicating the transition of the UE 405 from the idle state to the connected state. In some examples, the UE 405 may include an indication that the measurement report is available for transmission in the RRC setup or RRC resume completion message.

At 450 and 455, the UE 405 and the base station 105-c may exchange security information, and the UE 405 may receive NAS security algorithms to the UE 405 based on the RRC re-establishment and the transition from the UE 405 from the idle state to the connected state.

At 460, the UE 405 may receive a message indicating a request to transmit a measurement report (including the early measurements) in accordance with the measurement configuration. For example, the base station 105-c may request a PC5 EMR report from the UE 405. In some examples, the request may be a one-bit request indication for the EMR.

At 465, the UE may transmit a UE information response message (e.g., *UEInformationResponse*) to the base station 105-c. The information response message may include the early measurement report in accordance with the measurement configuration as requested by the base station 105-c in the information request message.

At 470, the base station 105-c may compare relay pairings between the UE 405 and a number of the relay UE candidates identified in the measurement report. Based on the measurement report, the base station 105-c may identify a relay configuration that includes a UE relay pairing between the UE 405 and relay UE candidate 410. The base station 105-c may transmit an RRC reconfiguration message to the UE 405, where the RRC reconfiguration message indicates a paired relay ID for the UE 405 and the relay UE candidate 410. At 475, the UE 405 may transmit an RRC reconfiguration completion message to the base station 105-c.

At 480, the UE 405 may establish a sidelink communication link with the relay UE candidate 410 based on the received paired relay ID and the relay configuration. At 485, the UE 405 may transmit data to the relay UE 410 using the sidelink connection, and the relay UE 410 may relay the data transmission from the UE 405 to the base station 105-c in accordance with the relay configuration.

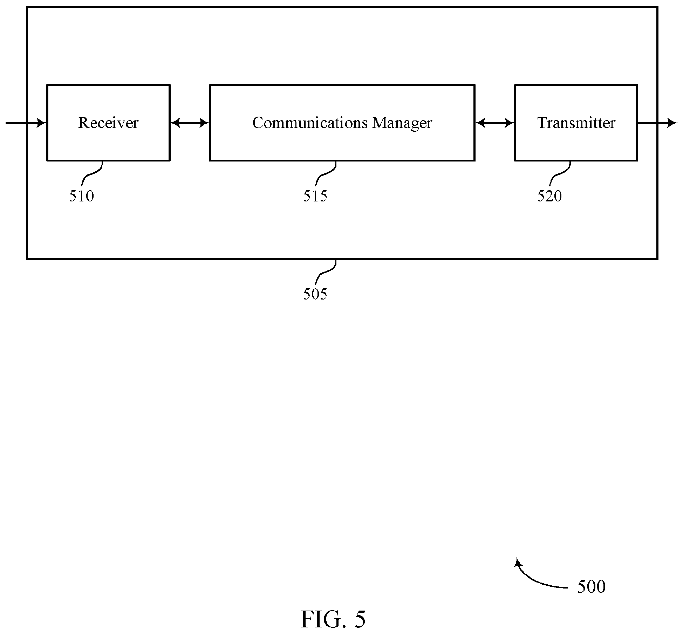

**FIG. 5** shows a block diagram 500 of a device 505 that supports relay selection based on early measurement in L2 relay in accordance with aspects of the present disclosure. The device 505 may be an example of aspects of a UE 115 as described herein. The device 505 may include a receiver 510, a communications manager 515, and a transmitter 520. The device 505 may also include a processor. Each of these components may be in communication with one another (e.g., via one or more buses).

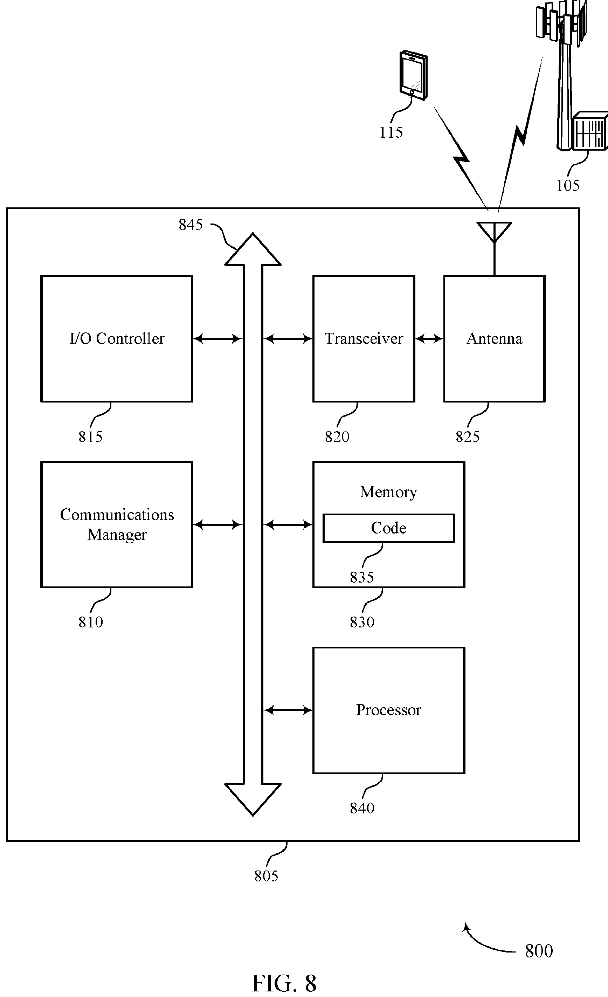

The receiver 510 may receive information such as packets, user data, or control information associated with various information channels (e.g., control channels, data channels, and information related to relay selection based on early measurement in L2 relay, etc.). Information may be passed on to other components of the device 505. The receiver 510 may be an example of aspects of the transceiver 820 described with reference to FIG. 8. The receiver 510 may utilize a single antenna or a set of antennas.

The communications manager 515 may receive a measurement configuration for performing a set of measurements on a set of relay UE candidates, perform the set of measurements on the set of relay UE candidates in accordance with the measurement configuration, transmit, to a base station, a measurement report including an indication of the set of measurements associated with the set of relay UE candidates, receive, from the base station, a relay configuration including a relay pairing between the UE and a first relay UE candidate of the set of relay UE candidates based on the measurement report, and establish a sidelink communication link with the first relay UE candidate in accordance with the relay configuration. The communications manager 515 may be an example of aspects of the communications manager 810 described herein.

The communications manager 515, or its sub-components, may be implemented in hardware, code (e.g., software or firmware) executed by a processor, or any combination thereof. If implemented in code executed by a processor, the functions of the communications manager 515, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 515, or its sub-components, may be physically located at various positions, including being distributed such that portions of functions are implemented at different physical locations by one or more physical components. In some examples, the communications manager 515, or its sub-components, may be a separate and distinct component in accordance with various aspects of the present disclosure. In some examples, the communications manager 515, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 520 may transmit signals generated by other components of the device 505. In some examples, the transmitter 520 may be collocated with a receiver 510 in a transceiver module. For example, the transmitter 520 may be an example of aspects of the transceiver 820 described with reference to FIG. 8. The transmitter 520 may utilize a single antenna or a set of antennas.

In some examples, communications manager 515 may be implemented as an integrated circuit or chipset for a mobile device modem, and the receiver 510 and transmitter 520 may be implemented as analog components (e.g., amplifiers, filters, and antennas) coupled with the mobile device modem to enable wireless transmission and reception.

The communications manager 515 as described herein may be implemented to realize one or more potential advantages. At least one implementation may enable communications manager 515 to effectively perform early measurements on a set of relay candidates and format a measurement report including the early measurements. At least one implementation may enable to communications manager 515 to perform early measurements before determining to establish a sidelink, thus reducing latency.

Based on implementing the techniques as described herein, one or more processors of the device 505 (e.g., processor(s) controlling or incorporated with one or more of receiver 510, communications manager 515, and transmitter 520) may effectively improve battery life of the device 505 by increasing the time that the device is in a low-power mode (e.g., an idle or inactive mode). In some other examples, the techniques described may increase reliability of D2D or sidelink communications between a relay device and a remote device.

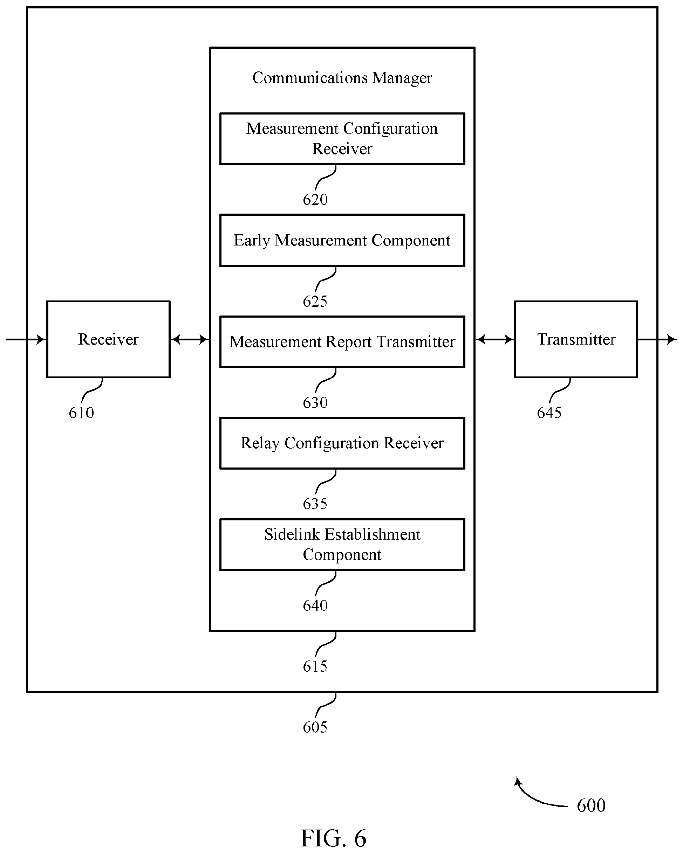

**FIG. 6** shows a block diagram 600 of a device 605 that supports relay selection based on early measurement in L2 relay in accordance with aspects of the present disclosure. The device 605 may be an example of aspects of a device 505, or a UE 115 as described herein. The device 605 may include a receiver 610, a communications manager 615, and a transmitter 645. The device 605 may also include a processor. Each of these components may be in communication with one another (e.g., via one or more buses).

The receiver 610 may receive information such as packets, user data, or control information associated with various information channels (e.g., control channels, data channels, and information related to relay selection based on early measurement in L2 relay, etc.). Information may be passed on to other components of the device 605. The receiver 610 may be an example of aspects of the transceiver 820 described with reference to FIG. 8. The receiver 610 may utilize a single antenna or a set of antennas.

The communications manager 615 may be an example of aspects of the communications manager 515 as described herein. The communications manager 615 may include a measurement configuration receiver 620, an early measurement component 625, a measurement report transmitter 630, a relay configuration receiver 635, and a sidelink establishment component 640. The communications manager 615 may be an example of aspects of the communications manager 810 described herein.

The measurement configuration receiver 620 may receive a measurement configuration for performing a set of measurements on a set of relay UE candidates.

The early measurement component 625 may perform the set of measurements on the set of relay UE candidates in accordance with the measurement configuration.

The measurement report transmitter 630 may transmit, to a base station, a measurement report including an indication of the set of measurements associated with the set of relay UE candidates.

The relay configuration receiver 635 may receive, from the base station, a relay configuration including a relay pairing between the UE and a first relay UE candidate of the set of relay UE candidates based on the measurement report.

The sidelink establishment component 640 may establish a sidelink communication link with the first relay UE candidate in accordance with the relay configuration.

The transmitter 645 may transmit signals generated by other components of the device 605. In some examples, the transmitter 645 may be collocated with a receiver 610 in a transceiver module. For example, the transmitter 645 may be an example of aspects of the transceiver 820 described with reference to FIG. 8. The transmitter 645 may utilize a single antenna or a set of antennas.

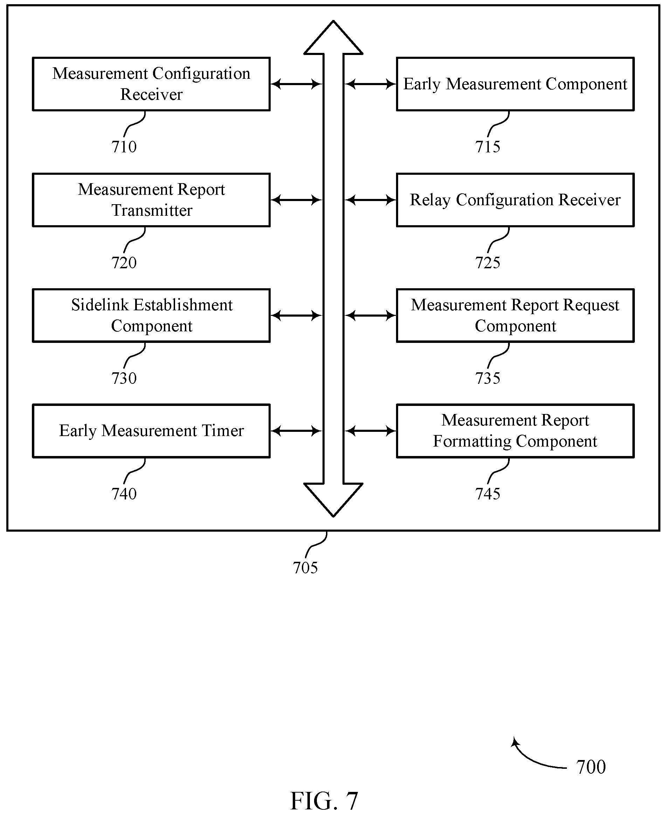

**FIG. 7** shows a block diagram 700 of a communications manager 705 that supports relay selection based on early measurement in L2 relay in accordance with aspects of the present disclosure. The communications manager 705 may be an example of aspects of a communications manager 515, a communications manager 615, or a communications manager 810 described herein. The communications manager 705 may include a measurement configuration receiver 710, an early measurement component 715, a measurement report transmitter 720, a relay configuration receiver 725, a sidelink establishment component 730, a measurement report request component 735, an early measurement timer 740, and a measurement report formatting component 745. Each of these modules may communicate, directly or indirectly, with one another (e.g., via one or more buses).

The measurement configuration receiver 710 may receive a measurement configuration for performing a set of measurements on a set of relay UE candidates. In some cases, the measurement configuration is formatted in a radio resource control release message.

The early measurement component 715 may perform the set of measurements on the set of relay UE candidates in accordance with the measurement configuration. The measurement report formatting component 745 may perform the set of measurements on the set of relay UE candidates prior to a determination to establish the sidelink communication in accordance with the measurement configuration. In some cases, the one or more measurement quantities include a reference signal receive power, a reference signal receive quality, a signal to interference plus noise ratio, or any combination thereof.

The early measurement timer 740 may identify a timer associated with performing the set of measurements. In some examples, the early measurement timer 740 may initiate the timer in accordance with the measurement configuration, where performing the set of measurements is based on the timer. In some examples, the early measurement timer 740 may suspend the timer and the performing of the set of measurements in response to an identified cell reselection event. In some examples, the early measurement timer 740 may resume the timer based on a completion of the identified cell reselection event.

The measurement report request component 735 may receive, from the base station, a message indicating a request to transmit the measurement report in accordance with the measurement configuration. In some cases, the message includes a one-bit request indication.

In some examples, the measurement report transmitter 720 may transmit, to the base station, an indication that the measurement report is available based on a first connection status of the UE. The measurement report transmitter 720 may transmit, to a base station, a measurement report including an indication of the set of measurements associated with the set of relay UE candidates. In some cases, the measurement report further includes an identifier of the first UE relay candidate, a different identifier of a cell associated with the first UE relay candidate, one or more measurement quantities associated with the first UE relay candidate and the UE, or any combination thereof. In some examples, the measurement report transmitter 720 may transmit the measurement report based on an idle connection status or an inactive connection status of the UE.

The relay configuration receiver 725 may receive, from the base station, a relay configuration including a relay pairing between the UE and a first relay UE candidate of the set of relay UE candidates based on the measurement report. In some cases, an indication of the relay pairing or a cell configuration is based on a connection status of the UE.

In some cases, the measurement configuration further includes a list of frequencies associated with the set of UE relay candidates, one or more identifiers of the set of UE relay candidates, a set of measurement quantities, one or more filtering parameters associated with the sidelink communication link, a demodulation reference signal configuration, one or more beam measurement and reporting thresholds for the set of UE relay candidates, or any combination thereof. In some cases, the relay configuration includes a L2 relay configuration.

The sidelink establishment component 730 may establish a sidelink communication link with the first relay UE candidate in accordance with the relay configuration. In some cases, the sidelink communication link includes a PC5 unicast link between the UE and the first UE relay candidate.

FIG. 8 shows a diagram of a system 800 including a device 805 that supports relay selection based on early measurement in L2 relay in accordance with aspects of the present disclosure. The device 805 may be an example of or include the components of device 505, device 605, or a UE 115 as described herein. The device 805 may include components for bi-directional voice and data communications including components for transmitting and receiving communications, including a communications manager 810, an I/O controller 815, a transceiver 820, an antenna 825, memory 830, and a processor 840. These components may be in electronic communication via one or more buses (e.g., bus 845).

The communications manager 810 may receive a measurement configuration for performing a set of measurements on a set of relay UE candidates, perform the set of measurements on the set of relay UE candidates in accordance with the measurement configuration, transmit, to a base station, a measurement report including an indication of the set of measurements associated with the set of relay UE candidates, receive, from the base station, a relay configuration including a relay pairing between the UE and a first relay UE candidate of the set of relay UE candidates based on the measurement report, and establish a sidelink communication link with the first relay UE candidate in accordance with the relay configuration.

The I/O controller 815 may manage input and output signals for the device 805. The I/O controller 815 may also manage peripherals not integrated into the device 805. In some cases, the I/O controller 815 may represent a physical connection or port to an external peripheral. In some cases, the I/O controller 815 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 815 may represent or interact with a modem, a keyboard, a mouse, a touchscreen, or a similar device. In some cases, the I/O controller 815 may be implemented as part of a processor. In some cases, a user may interact with the device 805 via the I/O controller 815 or via hardware components controlled by the I/O controller 815.

The transceiver 820 may communicate bi-directionally, via one or more antennas, wired, or wireless links as described above. For example, the transceiver 820 may represent a wireless transceiver and may communicate bi-directionally with another wireless transceiver. The transceiver 820 may also include a modem to modulate the packets and provide the modulated packets to the antennas for transmission, and to demodulate packets received from the antennas.

In some cases, the wireless device may include a single antenna 825. However, in some cases the device may have more than one antenna 825, which may be capable of concurrently transmitting or receiving multiple wireless transmissions.

The memory 830 may include RAM and ROM. The memory 830 may store computer-readable, computer-executable code 835 including instructions that, when executed, cause the processor to perform various functions described herein. In some cases, the memory 830 may contain, among other things, a BIOS which may control basic hardware or software operation such as the interaction with peripheral components or devices.

The processor 840 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In other cases, a memory controller may be integrated into the processor 840. The processor 840 may be configured to execute computer-readable instructions stored in a memory (e.g., the memory 830) to cause the device 805 to perform various functions (e.g., functions or tasks supporting relay selection based on early measurement in L2 relay).

The code 835 may include instructions to implement aspects of the present disclosure, including instructions to support wireless communications. The code 835 may be stored in a non-transitory computer-readable medium such as system memory or other type of memory. In some cases, the code 835 may not be directly executable by the processor 840 but may cause a computer (e.g., when compiled and executed) to perform functions described herein.

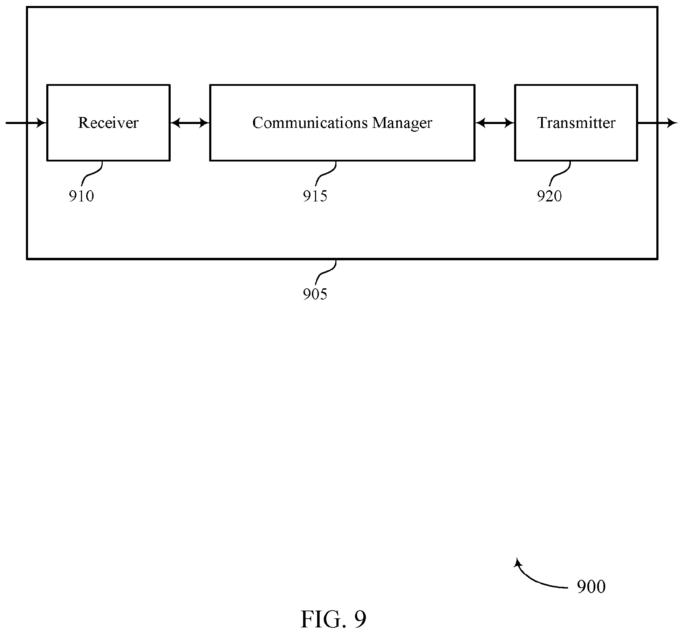

**FIG. 9** shows a block diagram 900 of a device 905 that supports relay selection based on early measurement in L2 relay in accordance with aspects of the present disclosure. The device 905 may be an example of aspects of a base station 105 as described herein. The device 905 may include a receiver 910, a communications manager 915, and a transmitter 920. The device 905 may also include a processor. Each of these components may be in communication with one another (e.g., via one or more buses).

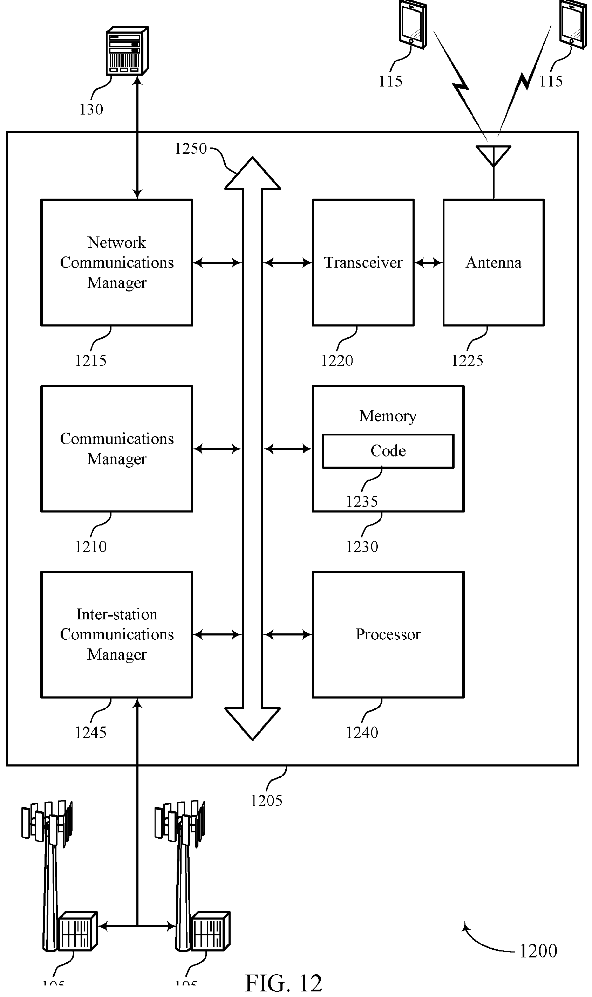

The receiver 910 may receive information such as packets, user data, or control information associated with various information channels (e.g., control channels, data channels, and information related to relay selection based on early measurement in L2 relay, etc.). Information may be passed on to other components of the device 905. The receiver 910 may be an example of aspects of the transceiver 1220 described with reference to FIG. 12. The receiver 910 may utilize a single antenna or a set of antennas.

The communications manager 915 may transmit, to a UE, a measurement configuration for the UE to perform a set of measurements on a set of relay UE candidates, receive a measurement report including an indication of the set of measurements associated with the set of relay UE candidates, determine a relay pairing between the UE and a first relay UE candidate of the set of relay UE candidates based on the measurement report, the relay pairing for establishing a sidelink communication link between the UE and the first relay UE candidate, and transmit, to the UE, a relay configuration including the relay pairing. The communications manager 915 may be an example of aspects of the communications manager 1210 described herein.

The communications manager 915, or its sub-components, may be implemented in hardware, code (e.g., software or firmware) executed by a processor, or any combination thereof. If implemented in code executed by a processor, the functions of the communications manager 915, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 915, or its sub-components, may be physically located at various positions, including being distributed such that portions of functions are implemented at different physical locations by one or more physical components. In some examples, the communications manager 915, or its sub-components, may be a separate and distinct component in accordance with various aspects of the present disclosure. In some examples, the communications manager 915, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 920 may transmit signals generated by other components of the device 905. In some examples, the transmitter 920 may be collocated with a receiver 910 in a transceiver module. For example, the transmitter 920 may be an example of aspects of the transceiver 1220 described with reference to FIG. 12. The transmitter 920 may utilize a single antenna or a set of antennas.

In some examples, communications manager 915 may be implemented as an integrated circuit or chipset for a mobile device modem, and the receiver 910 and transmitter 920 may be implemented as analog components (e.g., amplifiers, filters, and antennas) coupled with the mobile device modem to enable wireless transmission and reception.

The communications manager 915 as described herein may be implemented to realize one or more potential advantages. At least one implementation may enable communications manager 915 to effectively receive a measurement report and select a relay pairing between one or more devices in the network. At least one implementation may enable to communications manager 915 to transmit a relay pair response indicating the selected relay pairing to the remote device.

Based on implementing the techniques as described herein, one or more processors of the device 505 (e.g., processor(s) controlling or incorporated with one or more of receiver 510, communications manager 515, and transmitter 520) may effectively improve battery life of the device 505 by increasing the time that devices may operate in a low-power mode (e.g., an idle or inactive mode). In some other examples, the techniques described may increase reliability of D2D or sidelink communications between a relay device and a remote device and may further increase reliability of communications between the remote device and the base station.

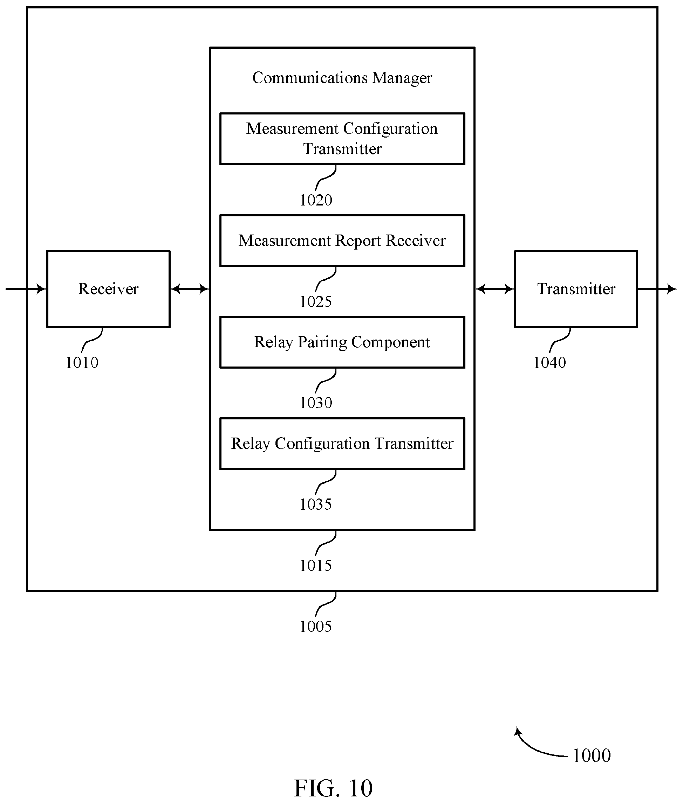

**FIG. 10** shows a block diagram 1000 of a device 1005 that supports relay selection based on early measurement in L2 relay in accordance with aspects of the present disclosure. The device 1005 may be an example of aspects of a device 905, or a base station 105 as described herein. The device 1005 may include a receiver 1010, a communications manager 1015, and a transmitter 1040. The device 1005 may also include a processor. Each of these components may be in communication with one another (e.g., via one or more buses).

The receiver 1010 may receive information such as packets, user data, or control information associated with various information channels (e.g., control channels, data channels, and information related to relay selection based on early measurement in L2 relay, etc.). Information may be passed on to other components of the device 1005. The receiver 1010 may be an example of aspects of the transceiver 1220 described with reference to FIG. 12. The receiver 1010 may utilize a single antenna or a set of antennas.

The communications manager 1015 may be an example of aspects of the communications manager 915 as described herein. The communications manager 1015 may include a measurement configuration transmitter 1020, a measurement report receiver 1025, a relay pairing component 1030, and a relay configuration transmitter 1035. The communications manager 1015 may be an example of aspects of the communications manager 1210 described herein.

The measurement configuration transmitter 1020 may transmit, to a UE, a measurement configuration for the UE to perform a set of measurements on a set of relay UE candidates.

The measurement report receiver 1025 may receive a measurement report including an indication of the set of measurements associated with the set of relay UE candidates.

The relay pairing component 1030 may determine a relay pairing between the UE and a first relay UE candidate of the set of relay UE candidates based on the measurement report, the relay pairing for establishing a sidelink communication link between the UE and the first relay UE candidate.

The relay configuration transmitter 1035 may transmit, to the UE, a relay configuration including the relay pairing.

The transmitter 1040 may transmit signals generated by other components of the device 1005. In some examples, the transmitter 1040 may be collocated with a receiver 1010 in a transceiver module. For example, the transmitter 1040 may be an example of aspects of the transceiver 1220 described with reference to FIG. 12. The transmitter 1040 may utilize a single antenna or a set of antennas.

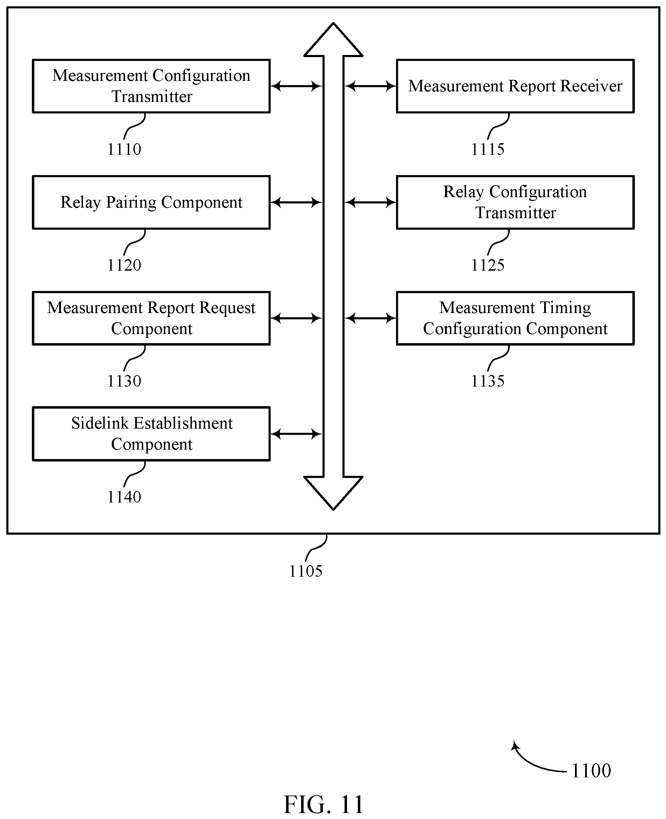

**FIG. 11** shows a block diagram 1100 of a communications manager 1105 that supports relay selection based on early measurement in L2 relay in accordance with aspects of the present disclosure. The communications manager 1105 may be an example of aspects of a communications manager 915, a communications manager 1015, or a communications manager 1210 described herein. The communications manager 1105 may include a measurement configuration transmitter 1110, a measurement report receiver 1115, a relay pairing component 1120, a relay configuration transmitter 1125, a measurement report request component 1130, a measurement timing configuration component 1135, and a sidelink establishment component 1140. Each of these modules may communicate, directly or indirectly, with one another (e.g., via one or more buses).

The measurement configuration transmitter 1110 may transmit, to a UE, a measurement configuration for the UE to perform a set of measurements on a set of relay UE candidates. In some cases, the measurement configuration is formatted in a radio resource control release message. In some cases, the measurement configuration further includes a list of frequencies associated with the set of UE relay candidates, one or more identifiers of the set of UE relay candidates, a set of measurement quantities, one or more filtering parameters associated with the sidelink communication link, a demodulation reference signal configuration, one or more beam measurement and reporting thresholds for the set of UE relay candidates, or any combination thereof. The measurement timing configuration component 1135 may configure a timing indication including a threshold period of time for the UE to perform the set of measurements in accordance with the measurement configuration.

The measurement report receiver 1115 may receive a measurement report including an indication of the set of measurements associated with the set of relay UE candidates. In some examples, the measurement report receiver 1115 may receive, from the UE, an indication that the measurement report is available based on a first connection status of the UE. In some examples, the measurement report receiver 1115 may receive the measurement report based on an idle connection status or an inactive connection status of the UE.

In some cases, the measurement report further includes an identifier of the first UE relay candidate, a different identifier of a cell associated with the first UE relay candidate, one or more measurement quantities associated with the first UE relay candidate and the UE, or any combination thereof. In some cases, the one or more measurement quantities include a reference signal receive power, a reference signal receive quality, a signal to interference plus noise ratio, or any combination thereof.

The relay pairing component 1120 may determine a relay pairing between the UE and a first relay UE candidate of the set of relay UE candidates based on the measurement report, the relay pairing for establishing a sidelink communication link between the UE and the first relay UE candidate. In some cases, the relay configuration includes a L2 relay configuration. The relay configuration transmitter 1125 may transmit, to the UE, a relay configuration including the relay pairing. In some examples, the relay configuration transmitter 1125 may format the relay configuration in a radio resource control reconfiguration message, the radio resource control reconfiguration message further including an indication of the relay pairing or a cell configuration based on a connection status of the UE.

The measurement report request component 1130 may transmit, to the UE, a message indicating a request to transmit the measurement report in accordance with the measurement configuration. In some cases, the message includes a one-bit request indication. In some cases, the sidelink communication link includes a PC5 unicast link between the UE and the first UE relay candidate.

**FIG. 12** shows a diagram of a system 1200 including a device 1205 that supports relay selection based on early measurement in L2 relay in accordance with aspects of the present disclosure. The device 1205 may be an example of or include the components of device 905, device 1005, or a base station 105 as described herein. The device 1205 may include components for bi-directional voice and data communications including components for transmitting and receiving communications, including a communications manager 1210, a network communications manager 1215, a transceiver 1220, an antenna 1225, memory 1230, a processor 1240, and an inter-station communications manager 1245. These components may be in electronic communication via one or more buses (e.g., bus 1250).

The communications manager 1210 may transmit, to a UE, a measurement configuration for the UE to perform a set of measurements on a set of relay UE candidates, receive a measurement report including an indication of the set of measurements associated with the set of relay UE candidates, determine a relay pairing between the UE and a first relay UE candidate of the set of relay UE candidates based on the measurement report, the relay pairing for establishing a sidelink communication link between the UE and the first relay UE candidate, and transmit, to the UE, a relay configuration including the relay pairing.

The network communications manager 1215 may manage communications with the core network (e.g., via one or more wired backhaul links). For example, the network communications manager 1215 may manage the transfer of data communications for client devices, such as one or more UEs 115.

The transceiver 1220 may communicate bi-directionally, via one or more antennas, wired, or wireless links as described above. For example, the transceiver 1220 may represent a wireless transceiver and may communicate bi-directionally with another wireless transceiver. The transceiver 1220 may also include a modem to modulate the packets and provide the modulated packets to the antennas for transmission, and to demodulate packets received from the antennas.

In some cases, the wireless device may include a single antenna 1225. However, in some cases the device may have more than one antenna 1225, which may be capable of concurrently transmitting or receiving multiple wireless transmissions.

The memory 1230 may include RAM, ROM, or a combination thereof. The memory 1230 may store computer-readable code 1235 including instructions that, when executed by a processor (e.g., the processor 1240) cause the device to perform various functions described herein. In some cases, the memory 1230 may contain, among other things, a BIOS which may control basic hardware or software operation such as the interaction with peripheral components or devices.

The processor 1240 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some cases, a memory controller may be integrated into processor 1240. The processor 1240 may be configured to execute computer-readable instructions stored in a memory (e.g., the memory 1230) to cause the device 1205 to perform various functions (e.g., functions or tasks supporting relay selection based on early measurement in L2 relay).

The inter-station communications manager 1245 may manage communications with other base station 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communication network technology to provide communication between base stations 105.

The code 1235 may include instructions to implement aspects of the present disclosure, including instructions to support wireless communications. The code 1235 may be stored in a non-transitory computer-readable medium such as system memory or other type of memory. In some cases, the code 1235 may not be directly executable by the processor 1240 but may cause a computer (e.g., when compiled and executed) to perform functions described herein.

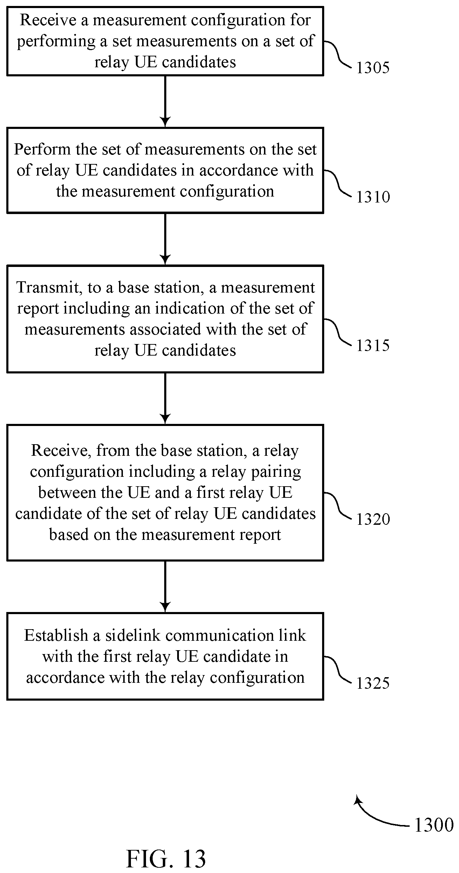

**FIG.** 13 shows a flowchart illustrating a method 1300 that supports relay selection based on early measurement in L2 relay in accordance with aspects of the present disclosure. The operations of method 1300 may be implemented by a UE 115 or its components as described herein. For example, the operations of method 1300 may be performed by a communications manager as described with reference to FIGs. 5 through 8. In some examples, a UE may execute a set of instructions to control the functional elements of the UE to perform the functions described below. Additionally, or alternatively, a UE may perform aspects of the functions described below using special-purpose hardware.

At 1305, the UE may receive a measurement configuration for performing a set of measurements on a set of relay UE candidates. The operations of 1305 may be performed according to the methods described herein. In some examples, aspects of the operations of 1305 may be performed by a measurement configuration receiver as described with reference to FIGs. 5 through 8.

At 1310, the UE may perform the set of measurements on the set of relay UE candidates in accordance with the measurement configuration. The operations of 1310 may be performed according to the methods described herein. In some examples, aspects of the operations of 1310 may be performed by an early measurement component as described with reference to FIGs. 5 through 8.

At 1315, the UE may transmit, to a base station, a measurement report including an indication of the set of measurements associated with the set of relay UE candidates. The operations of 1315 may be performed according to the methods described herein. In some examples, aspects of the operations of 1315 may be performed by a measurement report transmitter as described with reference to FIGs. 5 through 8.

At 1320, the UE may receive, from the base station, a relay configuration including a relay pairing between the UE and a first relay UE candidate of the set of relay UE candidates based on the measurement report. The operations of 1320 may be performed according to the methods described herein. In some examples, aspects of the operations of 1320 may be performed by a relay configuration receiver as described with reference to FIGs. 5 through 8.

At 1325, the UE may establish a sidelink communication link with the first relay UE candidate in accordance with the relay configuration. The operations of 1325 may be performed according to the methods described herein. In some examples, aspects of the operations of 1325 may be performed by a sidelink establishment component as described with reference to FIGs. 5 through 8.

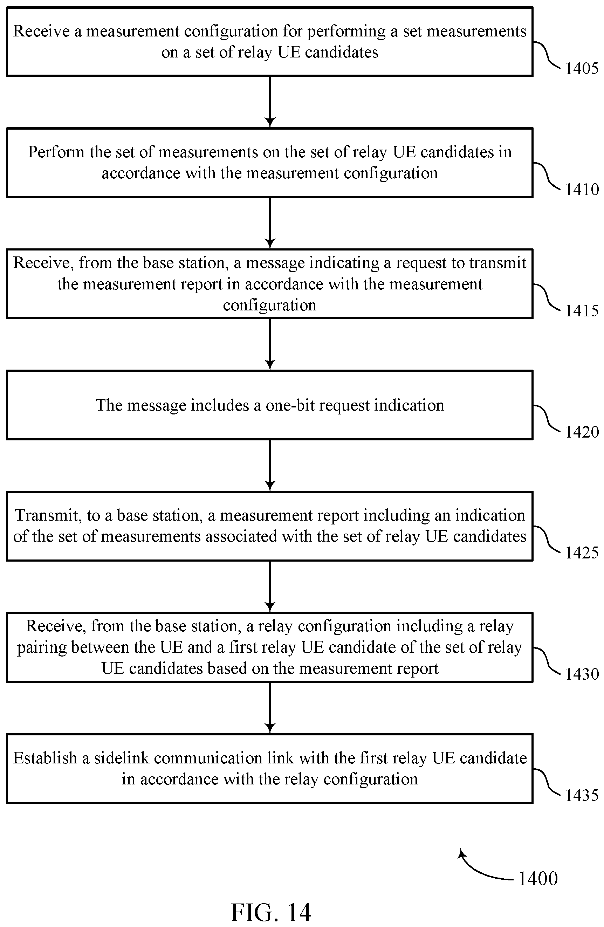

**FIG. 14** shows a flowchart illustrating a method 1400 that supports relay selection based on early measurement in L2 relay in accordance with aspects of the present disclosure. The operations of method 1400 may be implemented by a UE 115 or its components as described herein. For example, the operations of method 1400 may be performed by a communications manager as described with reference to FIGs. 5 through 8. In some examples, a UE may execute a set of instructions to control the functional elements of the UE to perform the functions described below. Additionally, or alternatively, a UE may perform aspects of the functions described below using special-purpose hardware.

At 1405, the UE may receive a measurement configuration for performing a set of measurements on a set of relay UE candidates. The operations of 1405 may be performed according to the methods described herein. In some examples, aspects of the operations of 1405 may be performed by a measurement configuration receiver as described with reference to FIGs. 5 through 8.

At 1410, the UE may perform the set of measurements on the set of relay UE candidates in accordance with the measurement configuration. The operations of 1410 may be performed according to the methods described herein. In some examples, aspects of the operations of 1410 may be performed by an early measurement component as described with reference to FIGs. 5 through 8.

At 1415, the UE may receive, from the base station, a message indicating a request to transmit the measurement report in accordance with the measurement configuration. The operations of 1415 may be performed according to the methods described herein. In some examples, aspects of the operations of 1415 may be performed by a measurement report request component as described with reference to FIGs. 5 through 8.

At 1420, the UE may the message includes a one-bit request indication. The operations of 1420 may be performed according to the methods described herein. In some examples, aspects of the operations of 1420 may be performed by a measurement report request component as described with reference to FIGs. 5 through 8.

At 1425, the UE may transmit, to a base station, a measurement report including an indication of the set of measurements associated with the set of relay UE candidates. The operations of 1425 may be performed according to the methods described herein. In some examples, aspects of the operations of 1425 may be performed by a measurement report transmitter as described with reference to FIGs. 5 through 8.

At 1430, the UE may receive, from the base station, a relay configuration including a relay pairing between the UE and a first relay UE candidate of the set of relay UE candidates based on the measurement report. The operations of 1430 may be performed according to the methods described herein. In some examples, aspects of the operations of 1430 may be performed by a relay configuration receiver as described with reference to FIGs. 5 through 8.

At 1435, the UE may establish a sidelink communication link with the first relay UE candidate in accordance with the relay configuration. The operations of 1435 may be performed according to the methods described herein. In some examples, aspects of the operations of 1435 may be performed by a sidelink establishment component as described with reference to FIGs. 5 through 8.

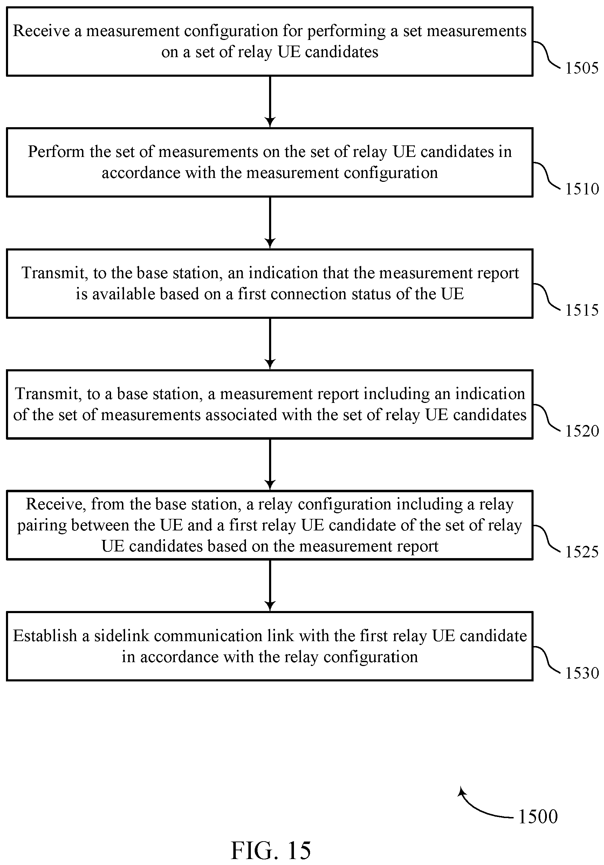

**FIG. 15** shows a flowchart illustrating a method 1500 that supports relay selection based on early measurement in L2 relay in accordance with aspects of the present disclosure. The operations of method 1500 may be implemented by a UE 115 or its components as described herein. For example, the operations of method 1500 may be performed by a communications manager as described with reference to FIGs. 5 through 8. In some examples, a UE may execute a set of instructions to control the functional elements of the UE to perform the functions described below. Additionally, or alternatively, a UE may perform aspects of the functions described below using special-purpose hardware.

At 1505, the UE may receive a measurement configuration for performing a set of measurements on a set of relay UE candidates. The operations of 1505 may be performed according to the methods described herein. In some examples, aspects of the operations of 1505 may be performed by a measurement configuration receiver as described with reference to FIGs. 5 through 8.

At 1510, the UE may perform the set of measurements on the set of relay UE candidates in accordance with the measurement configuration. The operations of 1510 may be performed according to the methods described herein. In some examples, aspects of the operations of 1510 may be performed by an early measurement component as described with reference to FIGs. 5 through 8.

At 1515, the UE may transmit, to the base station, an indication that the measurement report is available based on a first connection status of the UE. The operations of 1515 may be performed according to the methods described herein. In some examples, aspects of the operations of 1515 may be performed by a measurement report transmitter as described with reference to FIGs. 5 through 8.

At 1520, the UE may transmit, to a base station, a measurement report including an indication of the set of measurements associated with the set of relay UE candidates. The operations of 1520 may be performed according to the methods described herein. In some examples, aspects of the operations of 1520 may be performed by a measurement report transmitter as described with reference to FIGs. 5 through 8.

At 1525, the UE may receive, from the base station, a relay configuration including a relay pairing between the UE and a first relay UE candidate of the set of relay UE candidates based on the measurement report. The operations of 1525 may be performed according to the methods described herein. In some examples, aspects of the operations of 1525 may be performed by a relay configuration receiver as described with reference to FIGs. 5 through 8.

At 1530, the UE may establish a sidelink communication link with the first relay UE candidate in accordance with the relay configuration. The operations of 1530 may be performed according to the methods described herein. In some examples, aspects of the operations of 1530 may be performed by a sidelink establishment component as described with reference to FIGs. 5 through 8.

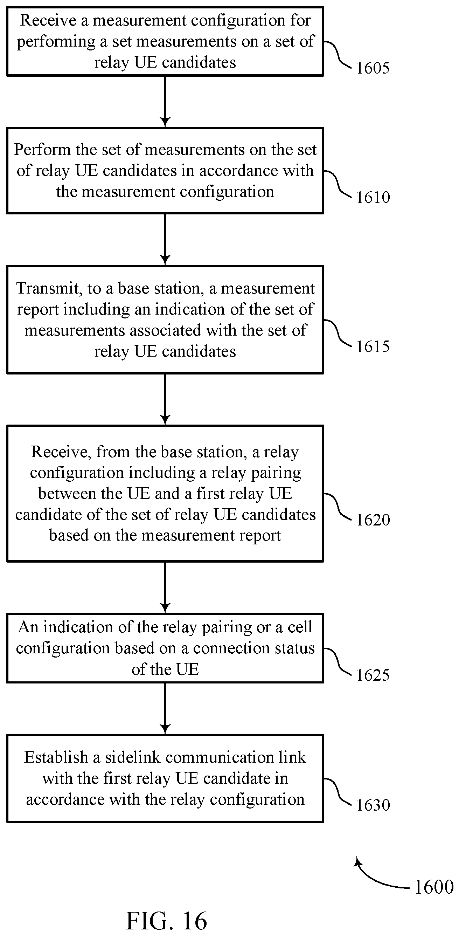

**FIG. 16** shows a flowchart illustrating a method 1600 that supports relay selection based on early measurement in L2 relay in accordance with aspects of the present disclosure. The operations of method 1600 may be implemented by a UE 115 or its components as described herein. For example, the operations of method 1600 may be performed by a communications manager as described with reference to FIGs. 5 through 8. In some examples, a UE may execute a set of instructions to control the functional elements of the UE to perform the functions described below. Additionally, or alternatively, a UE may perform aspects of the functions described below using special-purpose hardware.

At 1605, the UE may receive a measurement configuration for performing a set of measurements on a set of relay UE candidates. The operations of 1605 may be performed according to the methods described herein. In some examples, aspects of the operations of 1605 may be performed by a measurement configuration receiver as described with reference to FIGs. 5 through 8.

At 1610, the UE may perform the set of measurements on the set of relay UE candidates in accordance with the measurement configuration. The operations of 1610 may be performed according to the methods described herein. In some examples, aspects of the operations of 1610 may be performed by an early measurement component as described with reference to FIGs. 5 through 8.

At 1615, the UE may transmit, to a base station, a measurement report including an indication of the set of measurements associated with the set of relay UE candidates. The operations of 1615 may be performed according to the methods described herein. In some examples, aspects of the operations of 1615 may be performed by a measurement report transmitter as described with reference to FIGs. 5 through 8.

At 1620, the UE may receive, from the base station, a relay configuration including a relay pairing between the UE and a first relay UE candidate of the set of relay UE candidates based on the measurement report. The operations of 1620 may be performed according to the methods described herein. In some examples, aspects of the operations of 1620 may be performed by a relay configuration receiver as described with reference to FIGs. 5 through 8.

At 1625, the UE may an indication of the relay pairing or a cell configuration based on a connection status of the UE. The operations of 1625 may be performed according to the methods described herein. In some examples, aspects of the operations of 1625 may be performed by a relay configuration receiver as described with reference to FIGs. 5 through 8.

At 1630, the UE may establish a sidelink communication link with the first relay UE candidate in accordance with the relay configuration. The operations of 1630 may be performed according to the methods described herein. In some examples, aspects of the operations of 1630 may be performed by a sidelink establishment component as described with reference to FIGs. 5 through 8.

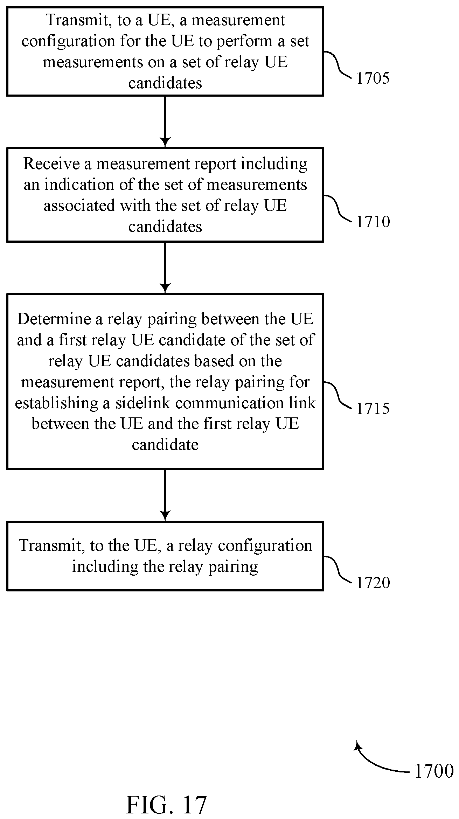

FIG. 17 shows a flowchart illustrating a method 1700 that supports relay selection based on early measurement in L2 relay in accordance with aspects of the present disclosure. The operations of method 1700 may be implemented by a base station 105 or its components as described herein. For example, the operations of method 1700 may be performed by a communications manager as described with reference to FIGs. 9 through 12. In some examples, a base station may execute a set of instructions to control the functional elements of the base station to perform the functions described below. Additionally, or alternatively, a base station may perform aspects of the functions described below using special-purpose hardware.

At 1705, the base station may transmit, to a UE, a measurement configuration for the UE to perform a set of measurements on a set of relay UE candidates. The operations of 1705 may be performed according to the methods described herein. In some examples, aspects of the operations of 1705 may be performed by a measurement configuration transmitter as described with reference to FIGs. 9 through 12.

At 1710, the base station may receive a measurement report including an indication of the set of measurements associated with the set of relay UE candidates. The operations of 1710 may be performed according to the methods described herein. In some examples, aspects of the operations of 1710 may be performed by a measurement report receiver as described with reference to FIGs. 9 through 12.

At 1715, the base station may determine a relay pairing between the UE and a first relay UE candidate of the set of relay UE candidates based on the measurement report, the relay pairing for establishing a sidelink communication link between the UE and the first relay UE candidate. The operations of 1715 may be performed according to the methods described herein. In some examples, aspects of the operations of 1715 may be performed by a relay pairing component as described with reference to FIGs. 9 through 12.

At 1720, the base station may transmit, to the UE, a relay configuration including the relay pairing. The operations of 1720 may be performed according to the methods described herein. In some examples, aspects of the operations of 1720 may be performed by a relay configuration transmitter as described with reference to FIGs. 9 through 12.

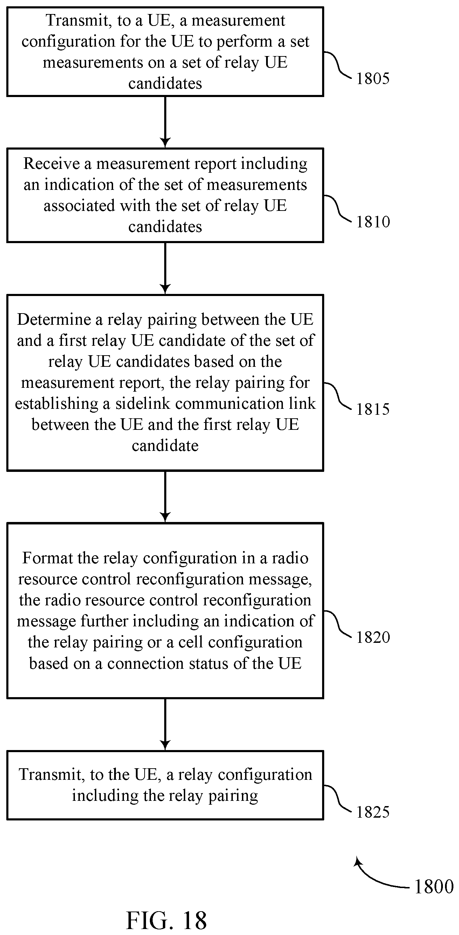

**FIG. 18** shows a flowchart illustrating a method 1800 that supports relay selection based on early measurement in L2 relay in accordance with aspects of the present disclosure. The operations of method 1800 may be implemented by a base station 105 or its components as described herein. For example, the operations of method 1800 may be performed by a communications manager as described with reference to FIGs. 9 through 12. In some examples, a base station may execute a set of instructions to control the functional elements of the base station to perform the functions described below. Additionally, or alternatively, a base station may perform aspects of the functions described below using special-purpose hardware.

At 1805, the base station may transmit, to a UE, a measurement configuration for the UE to perform a set of measurements on a set of relay UE candidates. The operations of 1805 may be performed according to the methods described herein. In some examples, aspects of the operations of 1805 may be performed by a measurement configuration transmitter as described with reference to FIGs. 9 through 12.

At 1810, the base station may receive a measurement report including an indication of the set of measurements associated with the set of relay UE candidates. The operations of 1810 may be performed according to the methods described herein. In some examples, aspects of the operations of 1810 may be performed by a measurement report receiver as described with reference to FIGs. 9 through 12.

At 1815, the base station may determine a relay pairing between the UE and a first relay UE candidate of the set of relay UE candidates based on the measurement report, the relay pairing for establishing a sidelink communication link between the UE and the first relay UE candidate. The operations of 1815 may be performed according to the methods described herein. In some examples, aspects of the operations of 1815 may be performed by a relay pairing component as described with reference to FIGs. 9 through 12.

At 1820, the base station may format the relay configuration in a radio resource control reconfiguration message, the radio resource control reconfiguration message further including an indication of the relay pairing or a cell configuration based on a connection status of the UE. The operations of 1820 may be performed according to the methods described herein. In some examples, aspects of the operations of 1820 may be performed by a relay configuration transmitter as described with reference to FIGs. 9 through 12.

At 1825, the base station may transmit, to the UE, a relay configuration including the relay pairing. The operations of 1825 may be performed according to the methods described herein. In some examples, aspects of the operations of 1825 may be performed by a relay configuration transmitter as described with reference to FIGs. 9 through 12.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. The protection scope of this application shall be subject to the protection scope of the claims.

## Claims

1. A method (1300) for wireless communications at a user equipment, UE, comprising:
receiving (1305) a measurement configuration for performing a plurality of measurements on a set of relay UE candidates;
performing (1310) the plurality of measurements on the set of relay UE candidates in accordance with the measurement configuration;
transmitting (1315), to a base station and based at least in part on an idle connection status or an inactive connection status of the UE, a measurement report comprising an indication of the plurality of measurements associated with the set of relay UE candidates;
receiving (1320), from the base station, a relay configuration comprising a relay pairing between the UE and a first relay UE candidate of the set of relay UE candidates based at least in part on the measurement report; and
establishing (1325) a sidelink communication link with the first relay UE candidate in accordance with the relay configuration.

2. The method of claim 1, further comprising:
receiving, from the base station, a message indicating a request to transmit the measurement report in accordance with the measurement configuration.

3. The method of claim 1, further comprising:
transmitting, to the base station, an indication that the measurement report is available based at least in part on a first connection status of the UE.

4. The method of claim 1, wherein receiving the measurement configuration further comprises:
identifying a timer associated with performing the plurality of measurements;
and
initiating the timer in accordance with the measurement configuration,
wherein performing the plurality of measurements is based at least in part on the timer.

5. The method of claim 1, wherein the relay configuration is formatted in a radio resource control reconfiguration message, the radio resource control reconfiguration message further comprising: an indication of the relay pairing or a cell configuration based at least in part on a connection status of the UE.

6. The method of claim 1, further comprising:
performing the plurality of measurements on the set of relay UE candidates prior to a determination to establish the sidelink communication in accordance with the measurement configuration.

7. The method of claim 1, wherein the measurement configuration further comprises a list of frequencies associated with the set of UE relay candidates, one or more identifiers of the set of UE relay candidates, a plurality of measurement quantities, one or more filtering parameters associated with the sidelink communication link, a demodulation reference signal configuration, one or more beam measurement and reporting thresholds for the set of UE relay candidates, or any combination thereof.

8. A method (1700) for wireless communications at a base station, comprising:
transmitting (1705), to a user equipment, UE, a measurement configuration for the UE to perform a plurality of measurements on a set of relay UE candidates;
receiving (1710), based at least in part on an idle connection status or an inactive connection status of the UE, a measurement report comprising an indication of the plurality of measurements associated with the set of relay UE candidates;
determining (1715) a relay pairing between the UE and a first relay UE candidate of the set of relay UE candidates based at least in part on the measurement report, the relay pairing for establishing a sidelink communication link between the UE and the first relay UE candidate; and
transmitting (1720), to the UE, a relay configuration comprising the relay pairing.

9. The method of claim 8, further comprising:
transmitting, to the UE, a message indicating a request to transmit the measurement report in accordance with the measurement configuration.

10. The method of claim 2 or claim 9, wherein the message comprises a one-bit request indication.

11. The method of claim 1 or claim 8, wherein the measurement report further comprises an identifier of the first UE relay candidate, a different identifier of a cell associated with the first UE relay candidate, one or more measurement quantities associated with the first UE relay candidate and the UE, or any combination thereof.

12. The method of claim 1 or claim 8, wherein the measurement configuration is formatted in a radio resource control release message.

13. An apparatus for wireless communications at a user equipment, UE, (115) comprising:
a processor,
memory coupled with the processor; and
instructions stored in the memory and executable by the processor to cause the apparatus to:
receive a measurement configuration for performing a plurality of measurements on a set of relay UE candidates;
perform the plurality of measurements on the set of relay UE candidates in accordance with the measurement configuration;
transmit, to a base station (105) and based at least in part on an idle connection status or an inactive connection status of the UE, a measurement report comprising an indication of the plurality of measurements associated with the set of relay UE candidates;
receive, from the base station, a relay configuration comprising a relay pairing between the UE and a first relay UE candidate of the set of relay UE candidates based at least in part on the measurement report; and
establish a sidelink communication link with the first relay UE candidate in accordance with the relay configuration.

14. An apparatus for wireless communications at a base station (105), comprising:
a processor,
memory coupled with the processor; and
instructions stored in the memory and executable by the processor to cause the apparatus to:
transmit, to a user equipment, UE (115), a measurement configuration for the UE to perform a plurality of measurements on a set of relay UE candidates;
receive, based at least in part on an idle connection status or an inactive connection status of the UE, a measurement report comprising an indication of the plurality of measurements associated with the set of relay UE candidates;
determine a relay pairing between the UE and a first relay UE candidate of the set of relay UE candidates based at least in part on the measurement report, the relay pairing for establishing a sidelink communication link between the UE and the first relay UE candidate; and
transmit, to the UE, a relay configuration comprising the relay pairing.

## Patentansprüche

1. Ein Verfahren (1300) für drahtlose Kommunikationen an einem Benutzergerät (User Equipment bzw. UE), aufweisend:
Empfangen (1305) einer Messkonfiguration für das Durchführen einer Vielzahl von Messungen auf einem Satz von Relais bzw. Weiterleitungs-UE-Kandidaten,
Durchführen (1310) der Vielzahl von Messungen auf dem Satz von Relais-UE-Kandidaten gemäß der Messkonfiguration,
Senden (1315), an eine Basisstation und basierend wenigstens teilweise auf einem ruhenden Verbindungsstatus oder einem inaktiven Verbindungsstatus des UE, eines Messberichts, der eine Angabe der Vielzahl von Messungen, die mit dem Satz von Relais-UE-Kandidaten assoziiert sind, aufweist,
Empfangen (1320), von der Basisstation, einer Relais- bzw. Weiterleitungskonfiguration, die ein Relais-Pairing zwischen dem UE und einem ersten Relais-UE-Kandidaten aus dem Satz von Relais-UE-Kandidaten aufweist, basierend wenigstens teilweise auf dem Messbericht, und
Herstellen (1325) einer Sidelink-Kommunikationsverbindung mit dem ersten Relais-UE-Kandidaten gemäß der Relaiskonfiguration.

2. Verfahren nach Anspruch 1, das weiterhin aufweist:
Empfangen, von der Basisstation, einer Nachricht, die eine Anfrage für das Senden des Messberichts gemäß der Messkonfiguration angibt,

3. Verfahren nach Anspruch 1, das weiterhin aufweist:
Senden, an die Basisstation, einer Angabe, dass der Messbericht verfügbar ist, basierend wenigstens teilweise auf einem ersten Verbindungsstatus des UE.

4. Verfahren nach Anspruch 1, wobei das Empfangen der Messkonfiguration weiterhin aufweist:
Identifizieren eines Timers, der mit dem Durchführen der Vielzahl von Messungen assoziiert ist, und
Starten des Timers gemäß der Messkonfiguration, wobei das Durchführen der Vielzahl von Messungen wenigstens teilweise auf dem Timer basiert.

5. Verfahren nach Anspruch 1, wobei die Relaiskonfiguration in einer Funkressourcensteuerung-Neukonfigurationsnachricht formatiert ist, wobei die Funkressourcensteuerung-Neukonfigurationsnachricht weiterhin eine Angabe des Relais-Pairings oder eine Zellenkonfiguration basierend wenigstens teilweise auf einem Verbindungsstatus des UE aufweist.

6. Verfahren nach Anspruch 1, das weiterhin aufweist:
Durchführen der Vielzahl von Messungen auf dem Satz von Relais-UE-Kandidaten bevor bestimmt wird, die Sidelink-Kommunikation gemäß der Messkonfiguration herzustellen.

7. Verfahren nach Anspruch 1, wobei die Messkonfiguration weiterhin eine Liste von Frequenzen, die mit dem Satz von Relais-UE-Kandidaten assoziiert sind, einen oder mehrere Identifizierer aus dem Satz von Relais-UE-Kandidaten, eine Vielzahl von Messgrößen, einen oder mehrere Filterungsparameter, die mit der Sidelink-Kommunikationsverbindung assoziiert sind, eine Demodulationsreferenzsignalkonfiguration, einen oder mehrere Strahlmessung/Bericht-Schwellenwerte für den Satz von Relais-UE-Kandidaten oder eine beliebige Kombination aus diesen aufweist.

8. Ein Verfahren (1700) für drahtlose Kommunikationen an einer Basisstation, aufweisend:
Senden (1705), an ein Benutzergerät (User Equipment bzw. UE), einer Messkonfiguration für das UE für das Durchführen einer Vielzahl von Messungen auf einem Satz von Relais-UE-Kandidaten,
Empfangen (1710), basierend wenigstens teilweise auf einem ruhenden Verbindungsstatus oder einem inaktiven Verbindungsstatus des UE, eines Messberichts, der eine Angabe der Vielzahl von Messungen, die mit dem Satz von Relais-UE-Kandidaten assoziiert sind, aufweist,
Bestimmen (1715) eines Relais-Pairings zwischen dem UE und einem ersten Relais-UE-Kandidaten aus dem Satz von Relais-UE-Kandidaten basierend wenigstens teilweise auf dem Messbericht, wobei das Relais-Pairing für das Herstellen einer Sidelink-Kommunikationsverbindung zwischen dem UE und dem ersten Relais-UE-Kandidaten dient, und
Senden (1720), an das UE, einer Relaiskonfiguration, die das Relais-Pairing aufweist.

9. Verfahren nach Anspruch 8, das weiterhin aufweist:
Senden, an das UE, einer Nachricht, die eine Anfrage für das Senden des Messberichts gemäß der Messkonfiguration angibt.

10. Verfahren nach Anspruch 2 oder 9, wobei die Nachricht eine Ein-Bit-Anfrageangabe aufweist.

11. Verfahren nach Anspruch 1 oder 8, wobei der Messbericht weiterhin einen Identifizierer des ersten Relais-UE-Kandidaten, einen anderen Identifizierer einer mit dem ersten Relais-UE-Kandidaten assoziierten Zelle, eine oder mehrere Messgrößen, die mit dem ersten Relais-UE-Kandidaten und dem UE assoziiert sind, oder eine beliebige Kombination aus diesen aufweist.

12. Verfahren nach Anspruch 1 oder 8, wobei die Messkonfiguration in einer Funkressourcensteuerung-Freigabenachricht formatiert ist.

13. Eine Vorrichtung für drahtlose Kommunikationen an einem Benutzergerät (User Equipment bzw. UE) (115), aufweisend:
einen Prozessor,
einen Speicher, der mit dem Prozessor gekoppelt ist, und
Befehle, die in dem Speicher gespeichert sind und durch den Prozessor ausgeführt werden können, um die Vorrichtung zu veranlassen zum:
Empfangen einer Messkonfiguration für das Durchführen einer Vielzahl von Messungen auf einem Satz von Relais-UE-Kandidaten,
Durchführen der Vielzahl von Messungen auf dem Satz von Relais-UE-Kandidaten gemäß der Messkonfiguration,
Senden, an eine Basisstation (105) und basierend wenigstens teilweise auf einem ruhenden Verbindungsstatus oder einem inaktiven Verbindungsstatus des UE, eines Messberichts, der eine Angabe der Vielzahl von Messungen, die mit dem Satz von Relais-UE-Kandidaten assoziiert sind, aufweist,
Empfangen, von der Basisstation, einer Relaiskonfiguration, die ein Relais-Pairing zwischen dem UE und einem ersten Relais-UE-Kandidaten aus dem Satz von Relais-UE-Kandidaten aufweist, basierend wenigstens teilweise auf dem Messbericht, und
Herstellen einer Sidelink-Kommunikationsverbindung mit dem ersten Relais-UE-Kandidaten gemäß der Relaiskonfiguration.

14. Eine Vorrichtung für drahtlose Kommunikationen an einer Basisstation (105), aufweisend:
einen Prozessor,
einen Speicher, der mit dem Prozessor gekoppelt ist, und
Befehle, die in dem Speicher gespeichert sind und durch den Prozessor ausgeführt werden können, um die Vorrichtung zu veranlassen zum:
Senden, an ein Benutzergerät (User Equipment bzw. UE) (115), einer Messkonfiguration für das UE für das Durchführen einer Vielzahl von Messungen auf einem Satz von Relais-UE-Kandidaten,
Empfangen, basierend wenigstens teilweise auf einem ruhenden Verbindungsstatus oder einem inaktiven Verbindungsstatus des UE, eines Messberichts, der eine Angabe der Vielzahl von Messungen, die mit dem Satz von Relais-UE-Kandidaten assoziiert sind, aufweist,
Bestimmen eines Relais-Pairings zwischen dem UE und einem ersten Relais-UE-Kandidaten aus dem Satz von Relais-UE-Kandidaten basierend wenigstens teilweise auf dem Messbericht, wobei das Relais-Pairing für das Herstellen einer Sidelink-Kommunikationsverbindung zwischen dem UE und dem ersten Relais-UE-Kandidaten dient, und
Senden, an das UE, einer Relaiskonfiguration, die das Relais-Pairing aufweist.

## Revendications

1. Un procédé (1300) pour la communication sans fil au niveau d'un équipement utilisateur, UE, comprenant les étapes consistant à :
recevoir (1305) une configuration de mesure pour effectuer une pluralité de mesures sur un ensemble de candidats UE relais ;
effectuer (1310) la pluralité de mesures sur l'ensemble des candidats UE relais conformément à la configuration de mesure ;
transmettre (1315), à une station de base et sur la base au moins en partie d'un état de connexion inactif ou d'un état de connexion inactif de l'UE, un rapport de mesure comprenant une indication de la pluralité de mesures associées à l'ensemble de candidats UE relais ;
recevoir (1320), de la station de base, une configuration de relais comprenant un appariement de relais entre l'UE et un premier candidat UE relais de l'ensemble de candidats UE relais basé au moins en partie sur le rapport de mesure ; et
établir (1325) une liaison de communication latérale avec le premier candidat UE relais conformément à la configuration de relais.

2. Le procédé selon la revendication 1, comprenant en outre l'étape consistant à :
recevoir, de la station de base, un message indiquant une demande de transmission du rapport de mesure conformément à la configuration de mesure.

3. Le procédé selon la revendication 1, comprenant en outre l'étape consistant à :
transmettre, à la station de base, une indication que le rapport de mesure est disponible sur la base au moins en partie d'un premier état de connexion de l'UE.

4. Le procédé selon la revendication 1, dans lequel la réception de la configuration de mesure comprend en outre les étapes consistant à :
identifier un temporisateur associé à la réalisation de la pluralité de mesures ; et
lancer le temporisateur conformément à la configuration de mesure, dans laquelle la réalisation de la pluralité de mesures est basée au moins en partie sur le temporisateur.

5. Le procédé selon la revendication 1, dans lequel la configuration de relais est formatée dans un message de reconfiguration de commande de ressource radio, le message de reconfiguration de commande de ressource radio comprenant en outre : une indication de l'appariement de relais ou une configuration de cellule basée au moins en partie sur un état de connexion de l'UE.

6. Le procédé selon la revendication 1, comprenant en outre l'étape consistant à :
effectuer la pluralité de mesures sur l'ensemble des candidats UE relais avant de déterminer d'établir la communication en liaison latérale conformément à la configuration de mesure.

7. Le procédé selon la revendication 1, dans lequel la configuration de mesure comprend en outre une liste de fréquences associées à l'ensemble de candidats relais UE, un ou plusieurs identifiants de l'ensemble de candidats relais UE, une pluralité de quantités de mesure, un ou plusieurs paramètres de filtrage associés à la liaison de communication latérale, une configuration de signal de référence de démodulation, un ou plusieurs seuils de mesure et de rapport de faisceau pour l'ensemble de candidats relais UE, ou toute combinaison de ceux-ci.

8. Procédé (1700) de communication sans fil au niveau d'une station de base, comprenant les étapes consistant à :
transmettre (1705), à un équipement utilisateur, UE, une configuration de mesure pour que l'UE effectue une pluralité de mesures sur un ensemble de candidats UE relais ;
recevoir (1710), sur la base au moins en partie d'un état de connexion inactif ou d'un état de connexion inactif de l'UE, un rapport de mesure comprenant une indication de la pluralité de mesures associées à l'ensemble de candidats UE relais ;
déterminer (1715) un appariement de relais entre l'UE et un premier candidat UE relais de l'ensemble de candidats UE relais sur la base au moins en partie du rapport de mesure, l'appariement de relais pour établir une liaison de communication latérale entre l'UE et le premier candidat UE relais ; et
transmettre (1720), à l'UE, une configuration de relais comprenant l'appariement de relais.

9. Le procédé selon la revendication 8, comprenant en outre l'étape consistant à :
transmettre, à l'UE, un message indiquant une demande de transmission du rapport de mesure conformément à la configuration de mesure.

10. Le procédé selon la revendication 2 ou la revendication 9, dans lequel le message comprend une indication de demande à un bit.

11. Le procédé selon la revendication 1 ou la revendication 8, dans lequel le rapport de mesure comprend en outre un identifiant du premier candidat relais UE, un identifiant différent d'une cellule associée au premier candidat relais UE, une ou plusieurs grandeurs de mesure associées au premier candidat relais UE et à l'UE, ou toute combinaison de ceux-ci.

12. Le procédé selon la revendication 1 ou la revendication 8, dans lequel la configuration de mesure est formatée dans un message de libération de commande de ressource radio.

13. Appareil pour les communications sans fil au niveau d'un équipement utilisateur, UE, (115) comprenant :
un processeur,
une mémoire couplée au processeur ; et
des instructions stockées dans la mémoire et exécutables par le processeur pour amener l'appareil à :
recevoir une configuration de mesure pour effectuer une pluralité de mesures sur un ensemble de candidats UE relais ;
effectuer la pluralité de mesures sur l'ensemble des candidats UE relais conformément à la configuration de mesure ;
transmettre, à une station de base (105) et sur la base au moins en partie d'un état de connexion inactif ou d'un état de connexion inactif de l'UE, un rapport de mesure comprenant une indication de la pluralité de mesures associées à l'ensemble de candidats UE relais ;
recevoir, de la station de base, une configuration de relais comprenant un appariement de relais entre l'UE et un premier candidat UE relais de l'ensemble de candidats UE relais basé au moins en partie sur le rapport de mesure ; et
établir une liaison de communication latérale avec le premier candidat UE relais conformément à la configuration de relais.

14. Appareil pour les communications sans fil au niveau d'une station de base (105), comprenant :
un processeur,
une mémoire couplée au processeur ; et
des instructions stockées dans la mémoire et exécutables par le processeur pour amener l'appareil à :
transmettre, à un équipement utilisateur, UE (115), une configuration de mesure pour que l'UE effectue une pluralité de mesures sur un ensemble de candidats UE relais ;
recevoir, sur la base au moins en partie d'un état de connexion inactif ou d'un état de connexion inactif de l'UE, un rapport de mesure comprenant une indication de la pluralité de mesures associées à l'ensemble de candidats UE relais ;
déterminer un appariement de relais entre l'UE et un premier candidat UE relais de l'ensemble de candidats UE relais sur la base, au moins en partie, du rapport de mesure, l'appariement de relais permettant d'établir une liaison de communication latérale entre l'UE et le premier candidat UE relais ; et
transmettre, à l'UE, une configuration de relais comprenant l'appariement de relais.
